# EUROPEAN PATENT APPLICATION

(11) **EP 1 619 736 A1**
(43) Date of publication of application: **25.01.2006**
(21) Application number: 04721370.7
(22) Date of filing: 17.03.2004
(51) Int. Cl.: H01M 8/02, H01M 8/12

(54) **FUEL CELL AND METHOD FOR PRODUCING ELECTROLYTE MEMBRANE FOR FUEL CELL**

(30) Priority: 18.03.2003 JP 2003072985; 25.07.2003 JP 2003201430; 12.02.2004 JP 2004034568
(71) Applicant: Toyota Jidosha Kabushiki Kaisha, Toyota-shi, Aichi 471-8571 (JP)
(72) Inventor: SATO, Hiromichi, c/o TOYOTA JIDOSHA K.K., Toyota-shi, Aichi 4718571 (JP); OGINO, Shigeru, c/o TOYOTA JIDOSHA K.K., Toyota-shi, Aichi 4718571 (JP); IGUCHI, Satoshi, c/o TOYOTA JIDOSHA K.K., Toyota-shi, Aichi 4718571 (JP); IIJIMA, Masahiko, c/o TOYOTA JIDOSHA K.K., Toyota-shi, Aichi 4718571 (JP); ITO, Naoki, c/o TOYOTA JIDOSHA K.K., Toyota-shi, Aichi 4718571 (JP); AOYAMA, Satoshi, c/o TOYOTA JIDOSHA K.K., Toyota-shi, Aichi 4718571 (JP); ENO, Hirotaka, c/o TOYOTA JIDOSHA K.K., Toyota-shi, Aichi 4718571 (JP)
(74) Representative: TBK-Patent
(86) International application number: PCT/JP2004/003605
(87) International publication number: WO 2004/084333

(57) **Abstract**

The present invention has as an object to produce a thinner electrolyte layer in a solid oxide type fuel cell.

In a solid oxide type fuel cell, a solid oxide electrolyte layer 110 is grown on the surface of a hydrogen-permeable metal layer 120. A structure is provided for preventing interlayer separation of the hydrogen-permeable metal layer 120 and the electrolyte layer 110 due to expansion of the hydrogen-permeable metal layer 120 during permeation of hydrogen. As the separation preventing mechanism, there can be employed a structure that prevents expansion of the hydrogen-permeable metal layer 120, or a structure wherein the electrolyte layer is divided to ameliorate stress during expansion. By so doing, the electrolyte layer can be thinned sufficiently.

## Description

### TECHNICAL FIELD

The present invention relates to a fuel cell employing an electrolyte membrane that comprises a hydrogen-permeable metal layer.

### BACKGROUND ART

In recent years, fuel cells that generate electricity through an electrochemical reaction of hydrogen and air have attracted notice as an energy source. Types of fuel cells currently available that use solid electrolyte membranes include high temperature type fuel cells of solid oxide type and the like.

Fuel cells of solid oxide type typically employ a thin membrane of zirconia or other inorganic substance as the electrolyte membrane sandwiched between the electrodes. The membrane resistance of such electrolyte membranes tends to increase at lower temperatures, and thus in order to keep membrane resistance within a practicable range, operation at relatively high temperature is necessary.

In fuel cells of solid oxide type, while it is possible to reduce the membrane resistance by reducing the thickness of the electrolyte membrane, it is extremely difficult in practice to form a fine thin membrane on the electrodes, which are formed form porous material, so that it is not possible to achieve a sufficiently thin film. Currently, solid oxide type fuel cells are typically operated at temperatures of about 700°C or above.

The issue of how to reduce membrane resistance through thinner electrolyte membranes is not exclusive to solid oxide types; rather, the issue is common to fuel cells of various kinds. In view of this problem, it is an object of the present invention to provide a technology for realizing a thinner electrolyte membrane.

JP-A-7-185277 is a related art that discloses hydrogen separation membranes used in solid oxide fuel cells and the like.

### DISCLOSURE OF THE INVENTION

With a view to addressing the aforementioned problem at least in part, in the present invention, the following construction is applied to the fuel cell. The fuel cell of the invention has a hydrogen electrode supplying hydrogen; an oxygen electrode supplying oxygen; and an electrolyte membrane disposed between the hydrogen electrode and the oxygen electrode. This electrolyte membrane includes a hydrogen-permeable metal layer, and an electrolyte layer formed on the surface of the hydrogen-permeable metal layer. Since the hydrogen-permeable metal layer is formed from metal, its surface is sufficiently fine. Accordingly, the electrolyte layer can be made sufficiently thin, and the membrane resistance of the electrolyte layer can be reduced.

As the hydrogen-permeable metal there may be employed, for example, a noble metal such as palladium (Pd) or palladium alloy; or a VA element, e.g., vanadium (V), niobium (Nb), tantalum (Ta), or the like. As the solid oxide for the electrolyte layer there can be used, for example, BaCeO₃ or SrCeO₃ based ceramics. The ionic conductivity of the electrolyte layer includes proton conductivity, for example.

Where the electrolyte membrane is formed of a composite material comprising a hydrogen-permeable metal layer and an electrolyte layer in this way, the problem of interlayer separation may occur. It is known that the hydrogen-permeable metals typically give rise to a phenomenon of expansion in volume as hydrogen permeates through. The electrolyte layer, on the other hand, is in some cases composed of certain material having an expansion rate during hydrogen permeation, that is significantly different from that of the hydrogen-permeable metal. This difference in expansion rate between the hydrogen-permeable metal layer and the electrolyte layer may contribute to interlayer separation during hydrogen permeation. In the present invention, such separation is prevented by means of furnishing the electrolyte membrane with a separation preventing mechanism for preventing separation of the hydrogen-permeable metal layer and the electrolyte layer during hydrogen permeation.

Herein, the separation preventing mechanism may be realized through various embodiments. In a first aspect, the mechanism is one that prevents expansion of the hydrogen-permeable metal layer during hydrogen permeation. Since the hydrogen-permeable metal layer typically has a high expansion rate, it is possible to prevent separation by means of preventing expansion of the hydrogen-permeable metal layer. The mechanism for preventing expansion of the hydrogen-permeable metal layer may consist, for example, of disposing a specific material with a lower expansion rate than the hydrogen-permeable metal during hydrogen permeation (hereinafter termed "skeletal frame material") within the hydrogen-permeable metal layer. The arrangement may be one in which a frame formed from the skeletal frame material is disposed around the hydrogen-permeable metal, or an arrangement wherein fibers formed from the skeletal frame material are embedded within the hydrogen-permeable metal layer. Materials for the skeletal frame elements include, for example, aluminum oxide (Al₂O₃), silicon carbide (SiC), or other ceramics; single elements or alloys including one or more metals selected from iron (Fe), nickel (Ni), chromium (Cr), molybdenum (Mo) and the like; graphite (C), boron (B), glass, and the like.

In preferred practice, the skeletal frame elements will be positioned so as to avoid the contact interface of the hydrogen-permeable metal layer with other layers. Contact interface refers, for example, to the interface between the hydrogen-permeable metal layer and an electrode, or the interface between the hydrogen-permeable metal layer and the electrolyte layer. In most cases the skeletal frame material will have low hydrogen permeability. Accordingly, by avoiding exposure of skeletal frame material at contact interfaces, there is provided a larger contact area of the hydrogen-permeable metal layer at the contact interfaces, so that transport of hydrogen or protons can proceed smoothly.

In a second aspect, the separation preventing mechanism may comprise a stress-relaxing layer formed of hydrogen-permeable material, disposed between the hydrogen-permeable metal layer and the electrolyte layer. In preferred practice, the average expansion rate of the stress-relaxing layer during hydrogen permeation will be an expansion rate between those of the hydrogen-permeable metal layer and the electrolyte layer. For example, a material having the physical properties in question may be selected; or it may be formed by a proton-conductive electrolyte layer with an expansion rate during hydrogen permeation that is lower than that of the hydrogen-permeable metal layer and higher than that of the electrolyte layer. Conversely, it may instead be formed by a hydrogen-permeable metal layer with an expansion rate during hydrogen permeation that is lower than that of the aforementioned hydrogen-permeable metal layer and higher than that of the electrolyte layer. In this exemplary arrangement, the hydrogen-permeable metal layer and the stress-relaxing layer may be composed of palladium-nickel alloy, with the stress-relaxing layer employing a structure wherein the nickel content increases going towards the electrolyte layer side. A material that combines the materials making up the hydrogen-permeable metal layer and the electrolyte layer may be used as well. A combination of a hydrogen-permeable metal layer and an electrolyte layer having irregularities formed on their surfaces may be used to produce a structure wherein the two layers are interwoven at within their contact faces. Since the average expansion rate of the layer in which the two layers are interwoven will be an expansion rate lying between that of the hydrogen-permeable metal layer and the electrolyte layer, this layer can function as a stress-relaxing layer. By interposing a stress-relaxing layer in this way, the strain difference produced between the electrolyte layer and the stress-relaxing layer, and between the stress-relaxing layer and the electrolyte layer can be reduced, whereby stress can be relaxed, and hence interlayer separation can be prevented.

The stress-relaxing layer need not be provided as a single layer. For example, the hydrogen-permeable metal layer and the stress-relaxing layer may be constituted as multiple stacked layers. By so doing, the stress-relaxing layers can prevent expansion of the hydrogen-permeable metal layer from both the front and back sides. By disposing stress-relaxing layers on both sides of the hydrogen-permeable metal layer, bending moment resulting from the strain difference of the hydrogen-permeable metal layer and the stress-relaxing layers can be reduced.

The hydrogen-permeable metal layer and the stress-relaxing layer may be laminated together by bonding or other means. Where the stress-relaxing layer is formed of metal, diffusion bonding of the hydrogen-permeable metal layer and the stress-relaxing layer is acceptable. Where diffusion bonding is employed, in preferred practice the stress-relaxing layer will be subjected to removal of the surface on the side opposite the bonding face, to a predetermined depth. By so doing, portions of high metal density in the stress-relaxing layer can be eliminated, and a drop in hydrogen-permeability prevented.

In a third aspect, the separation preventing mechanism may comprise a construction wherein a reinforcing member is disposed in a localized manner between the electrolyte layer and the hydrogen-permeable metal layer. In preferred practice, the reinforcing member will have higher interfacial strength than the interfacial strength between the electrolyte layer and the hydrogen-permeable metal layer, and will consist of material or construction in intimate contact with the layers. For the reinforcing member it would be possible to employ hydrogen- or proton-permeable material, or material having no such permeability. An example of the latter is magnesium oxide (MgO).

In a fourth aspect, the separation preventing mechanism may comprise a mixed layer disposed between the hydrogen-permeable metal layer and the electrolyte layer and containing a mixture of the materials that make up the two layers, in order to increase interfacial strength between the electrolyte layer and the hydrogen-permeable metal layer. An electrolyte membrane furnished with such a mixed layer can be produced, for example, by first forming the hydrogen-permeable metal layer, then forming the mixed layer on the surface thereof, then forming the electrolyte layer on the surface of the mixed layer. The mixed layer may be formed separately on the outside of the hydrogen-permeable metal layer, by means of application or vapor deposition of the material making up the mixed layer onto the hydrogen-permeable metal layer. The mixed layer may also be formed in proximity to the surface of the hydrogen-permeable metal layer, by means of embedding the material of which the electrolyte layer is formed, at a location in proximity to the surface layer. The proportion of hydrogen-permeable metal to electrolyte within the mixed layer may be constant across its thickness, or have a gradient.

Since the mixed layer contains the materials that make up the hydrogen-permeable metal layer and the electrolyte layer, it has affinity to both layers. According to the fourth aspect, interfacial strength between layers can be improved by interposing a mixed layer having this characteristic, so that separation is prevented.

In a fifth aspect, the separation preventing mechanism may involve forming irregular surfaces that mesh with one another, on the contact faces of the hydrogen-permeable metal layer and the electrolyte layer. Such an electrolyte membrane may be produced, for example, by forming the hydrogen-permeable metal layer, then machining the surface thereof into an irregular shape, and then forming the electrolyte layer so as to mesh with the irregular shape. An irregular shape may be produced by a method wherein the surface of the hydrogen-permeable metal layer is imparted with convex portions, or by removing portions of the surface to form concave portions. According to the fifth aspect, there can be provided an effect properly termed an anchoring effect, whereby the two layers are held together through the action of force resisting the shear stress at the contact interface accompanying strain in each layer, produced in the meshing portions of the irregular shapes. Interlayer separation can be prevented by means of this effect.

In a sixth aspect of the invention, the separation preventing mechanism may be constituted as a bending mechanism for pushing and bending the electrolyte membrane with the electrolyte layer on the inward side. When the electrolyte layer is bent inwardly due to expansion during permeation of hydrogen, the electrolyte layer is not subjected to tensile stress due to localized buckling. Since the electrolyte layer is typically more robust against compressive stress than against tensile stress, by producing inward bending with the electrolyte layer on the inward side, it is possible to reduce the likelihood of rupture of the electrolyte layer due to tensile stress caused by localized deformation. Such a bending mechanism may be realized by means of disposing a member on the side of the electrolyte layer opposite from the hydrogen-permeable metal layer, with the member decreasing in rigidity closer to the center portion of the electrolyte membrane. An electrode or a reinforcing plate may serve as the member. Possible structures whereby the member is made to decrease in rigidity closer to the center of the electrolyte membrane include a structure wherein the member is made thinner at the center, or a structure wherein cutouts are disposed in proximity of the center portion to lower rigidity. Cutouts may be disposed in a concentric circle configuration, or in greater number closer to the center.

In a seventh aspect of the invention, the separation preventing mechanism may be constituted by making the expansion rate during hydrogen permeation of the electrode forming the oxygen electrode disposed on the surface of the electrolyte layer approximately equal to the expansion ratio of the hydrogen-permeable metal layer during hydrogen permeation. By so doing, expansion of the electrode and of the hydrogen-permeable metal layer during hydrogen permeation are substantially equal, whereby unbalance of stress to which the electrolyte layer sandwiched between the two is subjected can be ameliorated. Additionally, the thickness of the electrode forming the oxygen electrode and the thickness of the hydrogen-permeable metal layer may be made approximately equal. Where their thicknesses are approximately the same, unbalance of stress to which the electrolyte layer is subjected can be ameliorated further.

In the present invention, the planar area of the electrolyte layer and of the hydrogen-permeable metal layer, that is, their areas in the plane orthogonal to the stacking direction, may be made equal; or the former may be made smaller than the latter. Where a plurality of electrolyte layers and hydrogen-permeable metal layers are stacked, it is preferable for the planar area of the electrolyte layers to be smaller than the planar area of the hydrogen-permeable metal layers. By so doing, portions of the hydrogen-permeable metal layers that project out beyond the electrolyte layers can be utilized for joining the layers. This has the advantage that the layers can be joined relatively easily and securely, since hydrogen-permeable metal is being bonding to itself.

On the other hand, where the electrolyte layer planar area is smaller than the hydrogen-permeable metal layer planar area, and the two layers have rectangular cross section, stress concentrations can be produced at the edges of the electrolyte layer, resulting in a susceptibility to separation. The separation preventing mechanism of the invention includes a mechanism for preventing separation due to stress concentrations.

Specifically, in an eighth aspect of the invention, the separation preventing mechanism may be constituted by means of imparting to the electrolyte layer and/or the hydrogen-permeable metal layer a cross sectional shape such that, at the edge of the electrolyte layer, the outer surfaces of the electrolyte layer and the hydrogen-permeable metal layer are smoothly continuous. A smoothly continuous outer surface refers to the absence of any discontinuous change of the direction of the normal vector of the outer surface, and to a continuous directional derivative of the outer surface within the cross section orthogonal to the stacking direction. By means of employing such a cross sectional shape, stress concentrations at the edges of the electrolyte layer may be relieved, and separation of the electrolyte layer and the hydrogen-permeable metal layer may be prevented.

The aforementioned cross sectional shape may also take the form of a groove disposed on at least the hydrogen-permeable metal layer, so as to form a face that continues smoothly on from the edge face of the electrolyte layer, for example. The groove may be produced, for example, by stacking the electrolyte layer on the surface of the hydrogen-permeable metal layer, and then cutting through the electrolyte layer down to the hydrogen-permeable metal layer by means of a laser or physical cutting process. By means of the cutting the electrolyte layer while and the hydrogen-permeable metal layer while they are stacked together, the side face of the groove will naturally form a face that smoothly connects the two layers. The groove is not limited to this method; it may be formed instead by cutting the hydrogen-permeable metal layer. The separation preventing mechanism of the eighth aspect is not limited to a groove. Cutting of the edge faces of the electrolyte layer in such a way that the edges faces of the electrolyte layer are smoothly continuous with the surface of the hydrogen-permeable metal layer is acceptable as well.

In the present invention, a structure wherein the electrolyte layer is formed divided into a plurality of sections may be employed in place of the separation preventing mechanism. With such a structure, gaps can be formed between the electrolyte layer sections during expansion of the hydrogen-permeable metal layer. Accordingly, it is possible to reduce the shear stress produced between the hydrogen-permeable metal layer and the electrolyte layer during hydrogen permeation, and interlayer separation can be prevented.

With an arrangement whereby the electrolyte layer is divided in this way, it is preferable to provide a permeation preventing mechanism in the gaps of the divided electrolyte layer, to prevent permeation of hydrogen. By so doing, leakage of hydrogen or protons between the electrodes can be prevented despite the formation of gaps.

In the present invention, the electrolyte membrane may have the following arrangement. A retaining member having a plurality of holes is disposed with the holes contacting the surface of the hydrogen-permeable metal layer. The holes are then filled with a liquid electrolyte. With this structure, since a liquid electrolyte is employed, expansion of the hydrogen-permeable metal layer during hydrogen permeation will not result in production of any stress between the hydrogen-permeable metal layer and the electrolyte, whereby damage such as separation can be avoided altogether.

The retaining member need not necessarily have ionic conductivity, but in preferred practice it will employ material having ionic conductivity in common with the electrolyte. By so doing, the retaining member per se can be endowed with electrolyte layer functionality, and the membrane resistance of the electrolyte membrane can be reduced.

In the fuel cell of the present invention described hereinabove, catalysts of various kinds may be supported on the hydrogen-permeable metal layer. Examples of such catalysts are reforming catalysts that accelerate reforming reactions of hydrocarbon compounds; carbon monoxide removal catalysts that accelerate the reaction to remove carbon monoxide; and atomic hydrogen forming catalysts that accelerate formation of atomic hydrogen. Carbon monoxide removal catalysts include shift catalysts that accelerate the shift reaction forming water and hydrogen from carbon monoxide; and carbon monoxide selective oxidation catalysts that selectively oxide carbon monoxide. The atomic hydrogen forming catalysts include the Group VIII elements, for example. By supporting at least one of these catalysts, it is possible to achieve supplemental action on the part of the particular catalyst, in conjunction with the hydrogen dissociating action in the electrolyte membrane.

In the fuel cell of the present invention, the hydrogen-permeable metal layer will preferably be disposed in contact with the hydrogen electrode. With this disposition, the electrolyte membrane has higher strain on the oxygen electrode side than on the hydrogen electrode side, thus producing bending moment so as to produce convexity on the hydrogen electrode side. Accordingly, with this disposition, in order to ameliorate this bending moment, in preferred practice the feed pressure to each electrode will be controlled such that the total pressure of the gas supplied to the hydrogen electrode is greater than the total pressure of the gas on the oxygen electrode side.

In the fuel cell of the present invention, the following arrangement may be employed as well. In the electrolyte membrane, an electrolyte layer doped with a heterogeneous element of smaller valence than the hydrogen-permeable metal may be formed on an oxide layer that has been formed on the surface of the hydrogen-permeable metal layer. By so doing, since the dopant has hole conductivity, a portion of the hydrogen-permeable metal layer can be utilized as an electrolyte layer having proton conductivity, so that damage such as separation can be avoided. In this case, the hydrogen-permeable metal layer may employ a Group VA element or alloy thereof. As dopants there could be used, for example, lanthanum (La), gadolinium (Gd), barium (Ba), potassium (K), or the like.

Doping with the heterogeneous element discussed above may be accomplished through various manufacturing methods. For example, after coating the heterogeneous element onto the surface of the oxide layer, the coating may be heated. Alternatively, with the oxide layer immersed in a solution that contains the heterogeneous element, the solution may be heated, or electrical current passed through it.

The present invention may take the form not only as a fuel cell embodiment as described previously, but also as an electrolyte membrane for use in a fuel cell. It may also take the form of a manufacturing method for manufacturing an electrolyte membrane or fuel cell. Nor is the invention limited to the form of any particular embodiment, it being possible to suitably combine or omit in part some of the various features described above.

### Brief Description of the Drawings

FIG. 1 is a model diagram depicting the overall arrangement of the fuel cell of Embodiment 1.
FIG. 2 is an illustration depicting the action of a pressure difference across the electrodes.
FIG. 3 is an illustration of electrolyte membrane structure.
FIG. 4 is a step diagram showing the process of producing the hydrogen-permeable metal layer.
FIG. 5 is a step diagram showing the process of producing the hydrogen-permeable metal layer of a Variation Example.
FIG. 6 is an illustration of electrolyte membrane structures of Variation Examples.
FIG. 7A and FIG. 7B are model diagrams depicting electrolyte membrane structure of Embodiment 2.
FIG. 8 is a sectional view of the electrolyte membrane of Embodiment 3.
FIG. 9 is an exemplary illustration of electrolyte membrane structures of Variation Examples.
FIG. 10A and FIG. 10B are illustrations of electrolyte membrane structures of Embodiment 4.
FIG. 11 is an illustration of electrolyte membrane structures of Variation Examples.
FIG. 12 is an illustration depicting the hydrogen-permeable metal layer of Embodiment 5.
FIG. 13 is an illustration of Variation Example 1 of Embodiment 5.
FIG. 14 is an illustration of Variation Example 2 of Embodiment 5.
FIG. 15 is an illustration depicting the composition of the electrolyte membrane 100E of Embodiment 6.
FIG. 16 is an illustration modeling deformation of the electrolyte membrane 100E of Embodiment 6.
FIG. 17 is an illustration depicting another composition example of the reinforcing plate in Embodiment 6.
FIG. 18 is an illustration depicting the composition of the electrolyte membrane 100F of Embodiment 7.
FIG. 19 is a step diagram showing the process of producing the electrolyte membrane of Embodiment 8.
FIG. 20 is a step diagram showing the process of producing the electrolyte membrane of a Variation Example.
FIG. 21 is an illustration depicting the process of producing the electrolyte membrane of Embodiment 9.
FIG. 22 is an illustration depicting the process of producing the electrolyte membrane of Embodiment 10.
FIG. 23 is an illustration depicting the process of producing the electrolyte membrane of a Variation Example of Embodiment 10.
FIG. 24 is an illustration depicting the process of producing the electrolyte membrane of Embodiment 11.
FIG. 25A to FIG. 25D are illustrations depicting the separation preventing action of the groove.
FIG. 26A and FIG. 26B are plan views depicting two types of electrolyte membrane in Embodiment 11.
FIG. 27A and FIG. 27B are illustrations depicting the cross section of the electrolyte membrane of a Variation Example of Embodiment 11.

### Best Mode for Carrying Out the Invention

The embodiments of the invention will be described in the following order.
- A.: Embodiment 1
- A1.: Overall Composition
- A2.: Electrolyte Membrane
- A3.: Variation Example
- B.: Embodiment 2
- C.: Embodiment 3
- D.: Embodiment 4
- E.: Embodiment 5
- F.: Embodiment 6
- G.: Embodiment 7
- H.: Embodiment 8
- I.: Embodiment 9
- J.: Embodiment 10
- K.: Embodiment 11

### A. Embodiment 1

### A1. Overall Composition

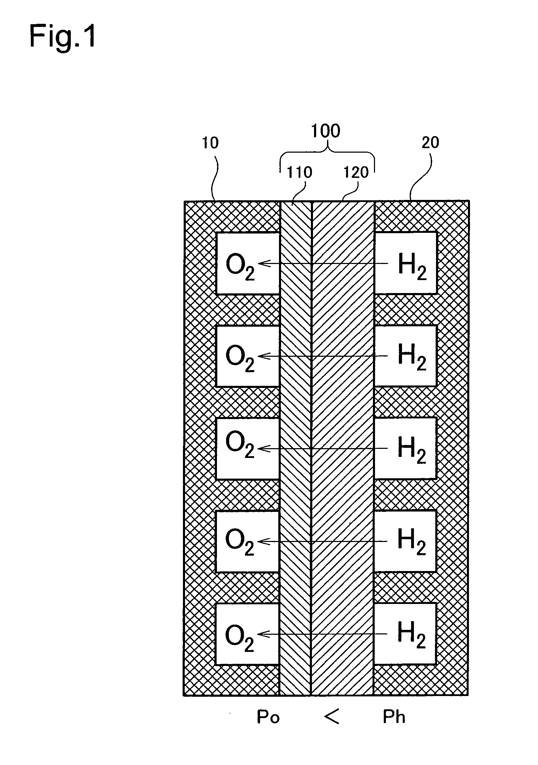

FIG. 1 is a model diagram depicting the overall arrangement of the fuel cell of Embodiment 1. A cell making up the fuel cell is shown in cross section. This cell has a structure wherein an electrolyte membrane 100 is sandwiched between an oxygen electrode 10 (hereinafter sometimes designated as the cathode) and a hydrogen electrode 20 (hereinafter sometimes designated as the anode). The structure and material of the oxygen electrode 10 and the hydrogen electrode 20 can be formed of various materials such as carbon.

The electrolyte membrane 100 has a thin electrolyte layer 110 of a solid oxide formed on the surface of a fine hydrogen-permeable metal layer 120 of vanadium (V). The electrolyte layer 110 may consist of a BaCeO₃ or SrCeO₃ based ceramic proton conductor. A coating of palladium (Pd) may be formed on the outside of the electrolyte layer 110. In this embodiment, the electrolyte layer 110 thickness is 1 µm, and the hydrogen-permeable metal layer 120 thickness is 40 µm. The thicknesses of the layers may be established arbitrarily.

In order to accelerate reactions between the oxygen electrode and the hydrogen electrode in the power generation process, it is typically to provide a catalyst layer of platinum (Pt) or the like in the cell. While omitted from the drawing, the catalyst layer can be disposed, for example, between the electrolyte membrane 100 and the oxygen electrode 10 or the hydrogen electrode 20. The catalyst layer could also be provided between the palladium (Pd) coating and the electrolyte layer 110, or between the electrolyte layer 110 and the hydrogen-permeable metal layer 120.

As illustrated, the oxygen electrode 10 is supplied with compressed air by way of oxygen-containing gas. The hydrogen electrode 20 is supplied with hydrogen rich fuel gas. The hydrogen in the fuel gas is separated by the hydrogen-permeable metal layer 120, and moves through the electrolyte layer 110 towards the oxygen electrode side. The pressure of the gases supplied to the oxygen electrode 10 and the hydrogen electrode 20 can be set arbitrarily; in this embodiment, however, the total pressure Ph of the hydrogen electrode 20 is set higher than the total pressure Po of the hydrogen electrode 20.

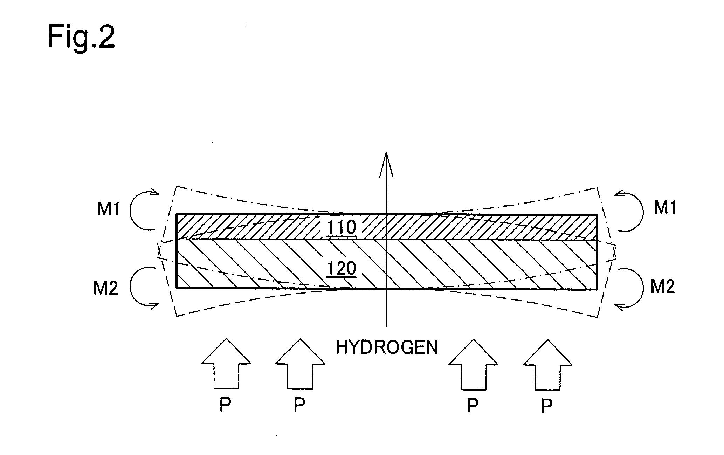

FIG. 2 is an illustration depicting the action of a pressure difference across the electrodes. The electrolyte layer 110 and the hydrogen-permeable metal layer 120 are shown in cross section. As indicated by the arrows in the drawing, as hydrogen moves from the hydrogen-permeable metal layer 120 and through the electrolyte layer 110, the layers expand. Typically, the expansion rate of the hydrogen-permeable metal layer 120 during hydrogen permeation will be higher than the expansion rate of the electrolyte layer 110. This difference in expansion rates creates bending moment M1 shown in the drawing, causing the electrolyte membrane to deform in the direction indicated by the dot-and-dash lines. Meanwhile, the pressure difference mentioned previously acts in the direction indicated by the arrows P. This pressure difference creates bending moment M2, causing the electrolyte membrane to deform in the direction indicated by broken lines. Accordingly, by setting the total pressure on the hydrogen electrode side to a higher level than the total pressure on the oxygen electrode side, it is possible exert bending moment M2 that cancels out the bending moment M1 during hydrogen permeation, thus reducing the level of deformation of the electrolyte membrane.

### A2. Electrolyte Membrane

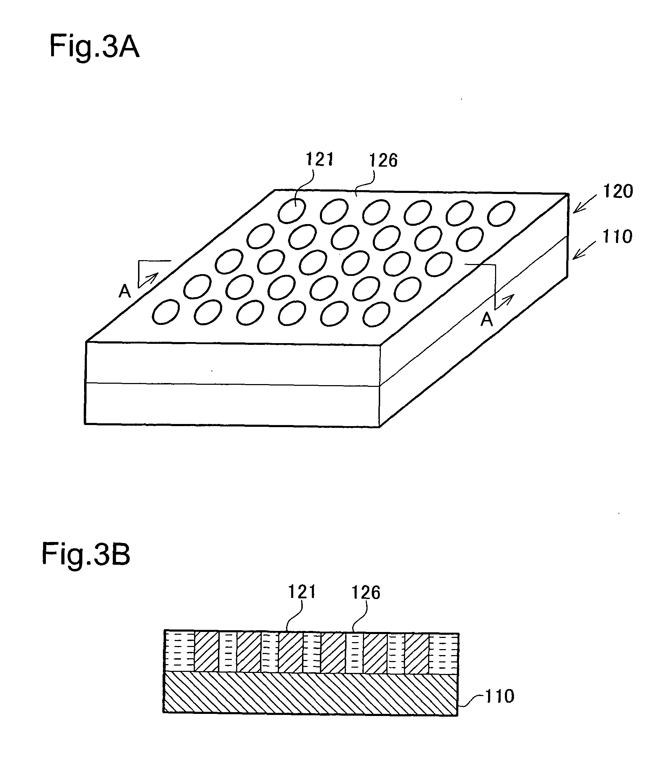

FIG. 3 is an illustration of electrolyte membrane structure. FIG. 3A shows a perspective view and FIG. 3B shows an A-A sectional view. In the drawing, the upper face is in contact with the hydrogen electrode 20 and the lower face is in contact with the oxygen electrode 10. The electrolyte layer 110 has a solid oxide formed uniformly thereon. The hydrogen-permeable metal layer 120 is formed of hydrogen-permeable metal 121 and a skeletal frame member 126. The hydrogen-permeable metal 121 can be a single metal or alloy containing one or more metals selected from palladium Pd and the Group VA metals, for example. The skeletal frame member 126 can employ material with lower hydrogen absorption, i.e. hydrogen solubility, per unit of volume than the hydrogen-permeable metal 121. Examples of such materials are ceramics such as silicon carbide (SiC); single metals or alloys including one or more elements selected from iron (Fe), nickel (Ni), chromium (Cr), molybdenum (Mo) and the like; as well as graphite (C), boron (B), or glass. Where a Group VA metal is used as the hydrogen-permeable metal 121, palladium or an alloy thereof may be used as the skeletal frame member 126. Where the skeletal frame member 126 is formed of metal, since the skeletal frame member 126 per se can function as the anode collector, there is the advantage of a simpler structure. The skeletal frame member 126 can be made of porous material; where aluminum oxide (Al₂O₃) is used for example, average pore size can be 02. µm and porosity on the order of 40%.

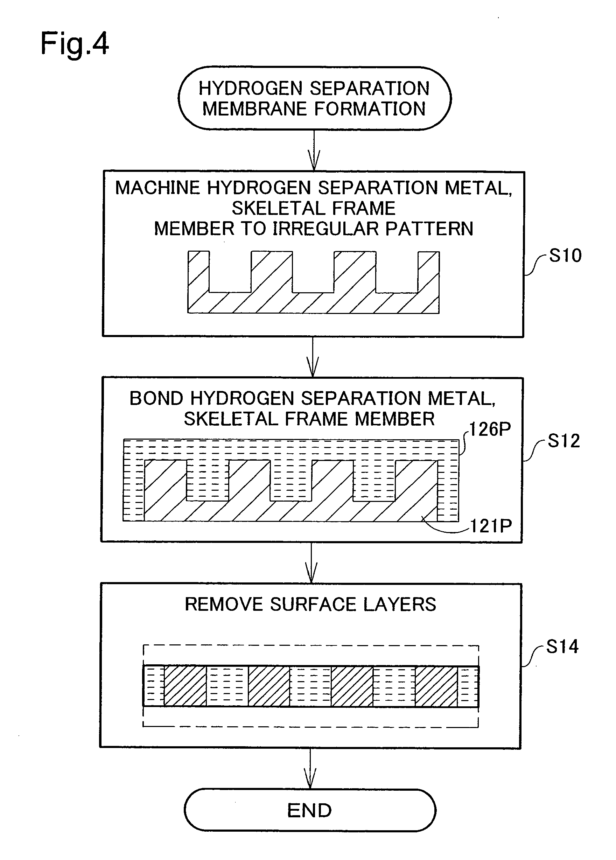

FIG. 4 is a step diagram showing the process of producing the hydrogen-permeable metal layer. First, the hydrogen-permeable metal layer and a thin film of the skeletal frame member are machined to irregular shape (Step S10). An exemplary irregular shape is depicted in the drawing. Next, the thin film 121P of hydrogen-permeable metal and the thin film 126P of the skeletal frame material are bonded together with their irregular portions intermeshed (Step S12). Finally, the surface layers composed of hydrogen-permeable metal or skeletal frame material alone are removed through grinding or etching (Step S14).

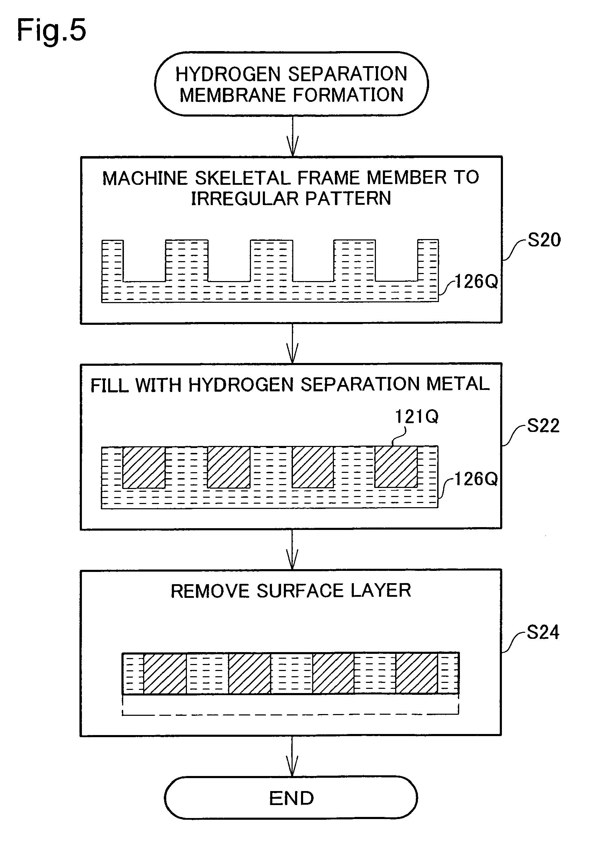

FIG. 5 is a step diagram showing the process of producing the hydrogen-permeable metal layer of a Variation Example. First, a thin film 126Q of skeletal frame material is machined to irregular shape (Step S20). The concave portions of this thin film are then filled with hydrogen-permeable metal 121Q (Step S22). The surface layer portion composed of hydrogen-permeable metal alone is then removed through grinding or etching (Step S24). It is possible to product the hydrogen-permeable metal layer by various methods other than that depicted here by way of example.

In the fuel cell of Embodiment 1 described above, a thin electrolyte layer 110 is formed on the surface of the hydrogen-permeable metal layer 120. Since the hydrogen-permeable metal layer 120 is sufficiently fine, the thickness of the electrolyte layer 110 can be kept down, and membrane resistance can be reduced.

In the fuel cell of Embodiment 1, the skeletal frame member 126 constitutes a frame around the hydrogen-permeable metal 121. Since the skeletal frame member 126 has a low expansion rate during hydrogen permeation, expansion of the hydrogen-permeable metal 121 can be regulated. As a result, the strain difference between the hydrogen-permeable metal layer 120 and the electrolyte layer 110 can be reduced, and separation of the two can be prevented.

### A3. Variation Example

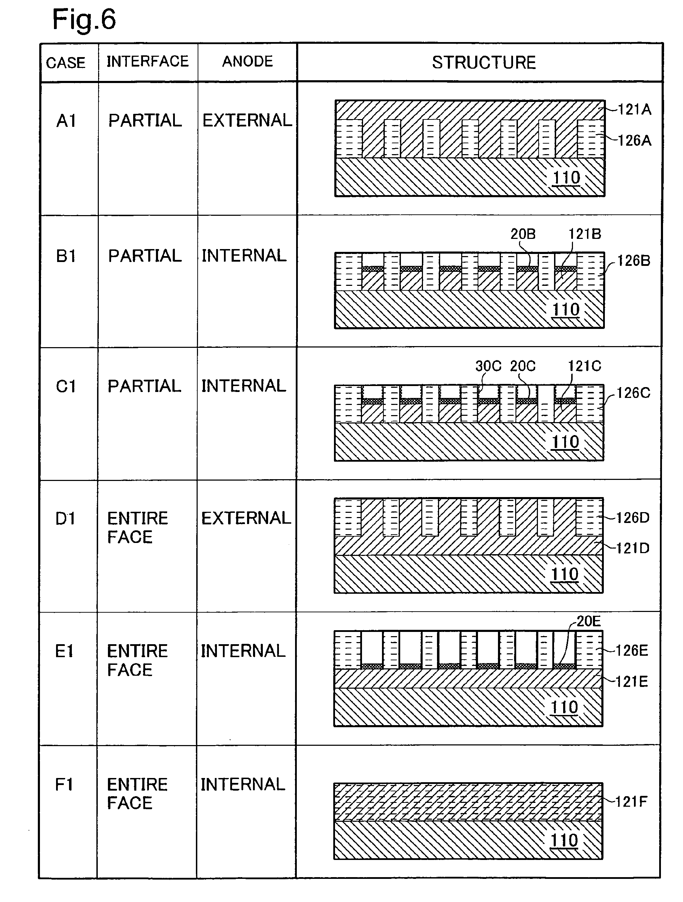

FIG. 6 is an illustration of electrolyte membrane structures of Variation Examples. Here, six cases, namely Case A1 -Case F1, are shown. These may be classified according to whether contact interface of the electrolyte layer 110 and the hydrogen-permeable metal layer 120 may be partial or coextensive with the entire face; and to whether the anode is inside or outside the electrolyte membrane.

Case A1 is an example in which the contact interface is partial, and the anode is arranged to the outside. As with the Embodiment, a skeletal frame member 126A is disposed around hydrogen-permeable metal 121A. However, on the anode contact face (upper face in the drawing), the skeletal frame member 126A is not exposed. Accordingly, the hydrogen-permeable metal 121A can contact the anode over its entire face, so that migration of hydrogen proceeds smoothly, and thus membrane resistance can be reduced.

Case B1 is an example in which the contact interface is partial, and the anode is arranged to the inside. As with Embodiment 1, hydrogen-permeable metal 121B is disposed within recesses in a skeletal frame member 126B. The anode 20B is arranged on the upper face of the hydrogen-permeable metal 121B. With this construction, by making the hydrogen-permeable metal 121B thin, the rate of hydrogen permeation can be improved, and thus membrane resistance can be reduced.

Case C1 is an example in which the contact interface is partial, and the anode is arranged to the inside. As with Case B1, hydrogen-permeable metal 121C is disposed within recesses in a skeletal frame member 126C, and an anode 20C is arranged on the upper face of the hydrogen-permeable metal 121C. Various catalysts 30C are supported within the recesses. Examples of catalysts that can be applied are reforming catalysts that accelerate reforming reactions of hydrocarbon compounds; carbon monoxide removal catalysts that accelerate the reaction to remove carbon monoxide; and atomic hydrogen forming catalysts that accelerate formation of atomic hydrogen (also referred to as spillover hydrogen forming catalysts). The carbon monoxide removal catalysts include shift catalysts that accelerate the shift reaction forming water and hydrogen from carbon monoxide; and carbon monoxide selective oxidation catalysts that selectively oxide carbon monoxide. The atomic hydrogen forming catalysts include the Group VIII elements, for example, platinum (Pt), palladium (Pd), rhodium (Rh), ruthenium (Ru) and so on.

By means of supporting at least one of these catalysts, it is possible to achieve supplemental action on the part of the particular catalyst, in addition to the hydrogen separating action of the electrolyte membrane. For example, where a reforming catalyst is supported, the reforming reactor can be made smaller or dispensed with altogether. Where a carbon monoxide removal catalyst is supported, the shift reactor or carbon monoxide selective oxidation reactor can be made smaller or dispensed with altogether, and the concentration of a component that is harmful to the fuel cell can be reduced. Since the hydrogen formed in the shift reaction is separated by the hydrogen-permeable metal 121, an advantage is the shift reaction, which is an equilibrium reaction, is accelerated. Where an atomic hydrogen forming catalyst is supported, the rate of hydrogen permeation and be improved, and thus membrane resistance can be reduced.

Case D1 is an example in which the contact interface is the entire face, and the anode is arranged to the outside. As with the Embodiment, hydrogen-permeable metal 121D is disposed within recesses in a skeletal frame member 126D. However, on the contact face with the electrolyte layer 110, the skeletal frame member 126D is not exposed. Accordingly, the hydrogen-permeable metal 121A can contact the electrolyte layer 110 over its entire face, so that migration of hydrogen proceeds smoothly, and thus membrane resistance can be reduced.

Case E1 is an example in which the contact interface is the entire face, and the anode is arranged to the inside. In Case E1, a skeletal frame member 126E is stacked onto the stacked electrolyte layer 110 and hydrogen-permeable metal 121E. An anode 20E is disposed in the recessed portions of the skeletal frame member 126E, without placing hydrogen-permeable metal 121E therein. Even without the hydrogen-permeable metal 121E being framed by a skeletal frame member, expansion of the hydrogen-permeable metal 121E can be regulated and separation of the hydrogen-permeable metal 121E and the electrolyte layer 110 can be prevented. The case E1 has the advantage that production costs can be reduced. An additional advantage is that since the hydrogen-permeable metal 121E and the electrolyte layer 110 are in contact over their entire face, smooth migration of hydrogen or protons at the contact interface can be achieved.

Case F1 is an example in which the contact interface is the entire face, and the anode is arranged to the inside. In Case F1, skeletal frame material is admixed in the interior of the hydrogen-permeable metal layer 121F. For example, fibers of the material which makes up the skeletal frame member, such as aluminum oxide (Al₂O₃), silicon carbide (SiC), graphite (C), or boron (B), can be admixed as reinforcing fibers. With this structure, for example, it is possible to admix the hydrogen-permeable metal and the reinforcing fibers, produce an ingot by melting the separate metal at high temperature, and calendaring this into a thin sheet. A liquid quench method may also be employed in manufacture. The method involves spraying melted hydrogen-permeable metal with reinforcing fibers mixed therein onto a rotating chill roll surface, to form a thin film. An advantage of Case F1 is that a hydrogen-permeable metal layer 121F having a controlled expansion rate can be formed by a relatively simple process.

### B. Embodiment 2:

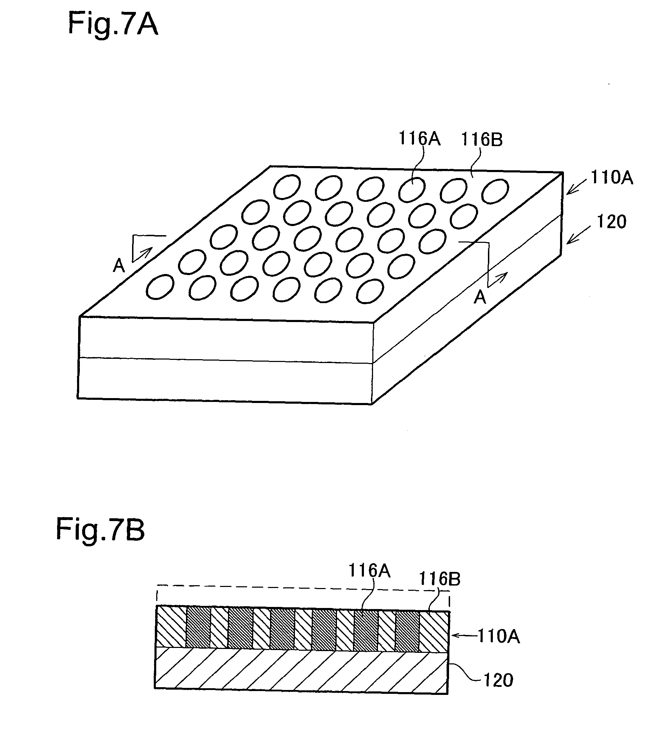

The structure of the electrolyte membrane of Embodiment 2 will be described next. FIG. 7A is a model diagram depicting the structure of the electrolyte membrane of Embodiment 2. FIG. 7B is a sectional view thereof taken along line A-A. In this drawing, the upper face in the drawing contacts the oxygen electrode 10, and the lower face in the drawing contact the hydrogen electrode 20. The hydrogen-permeable metal 120 can be a single metal or alloy containing at least one element from palladium Pd and the Group VA metals.

The electrolyte layer 110A is formed of a liquid electrolyte 116A and a retaining member 116B. Porous ceramic was used as the proton-conductive material of the retaining member 116B. However, it would be possible to use a material lacking proton conductivity, or a fine material.

The electrolyte 116A fills the convex portions of the retaining member 116B. An example of proton-conductive liquid material is lithium chloride-strontium chloride (LiCl-SrCl₂). A porous electrode impregnated with the electrolyte 116A may be placed an the upper face of the electrolyte layer 110A, as indicated by the broken lines in FIG. 7B. This electrode placement forms a liquid phase proton-electrode-catalyst three-phase interface within the electrode, so that reactions on the electrode can be accelerated. Another advantage is that the electrode reduces evaporation of the liquid electrolyte.

According to Embodiment 2 described above, since a liquid electrolyte 116A is used, despite expansion of the hydrogen-permeable metal 120 during hydrogen permeation, stress between the hydrogen-permeable metal layer 120 and the electrolyte layer 110A can be reduced, and interlayer separation can be prevented.

### C. Embodiment 3:

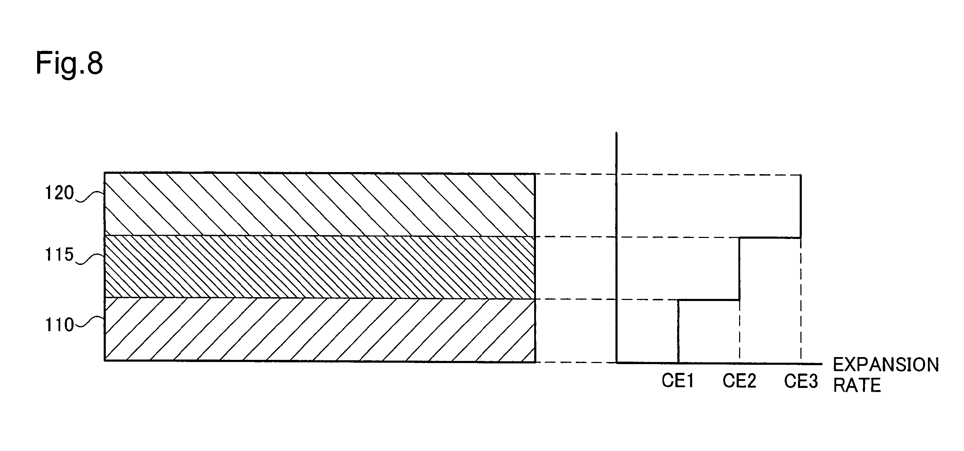

FIG. 8 is a sectional view of the electrolyte membrane of Embodiment 3. This electrolyte membrane has a stress-relieving layer 115 disposed between the electrolyte layer 110 and the hydrogen-permeable metal layer 120. The expansion rate during hydrogen permeation is modeled at right in the drawing. The expansion rate of the electrolyte layer 110 has a minimum value of CE1, the expansion rate of the hydrogen-permeable metal layer 120 has a maximum value of CE3, and the stress-relieving layer has a value CE2 lying between CE1 and CE3.

The stress-relieving layer 115 may take various forms depending on the material of the hydrogen-permeable metal layer 120. For example, where a Group VA element is used as the hydrogen-permeable metal layer 120, the stress-relieving layer may employ palladium Pd or other metal with lower hydrogen permeability than the Group VA elements. It is also possible to employ a stress-relieving layer 115 of material that is a mixture of the materials of the hydrogen-permeable metal layer 120 and the electrolyte layer 110.

According to the electrolyte membrane of Embodiment 3, the strain difference between the electrolyte layer 110 and the stress-relieving layer 115, and the strain difference between the stress-relieving layer 115 and the hydrogen-permeable metal layer 120 are lower, as compared to the case where no stress-relieving layer 115 is provided. Accordingly, separation between these layers can be prevented.

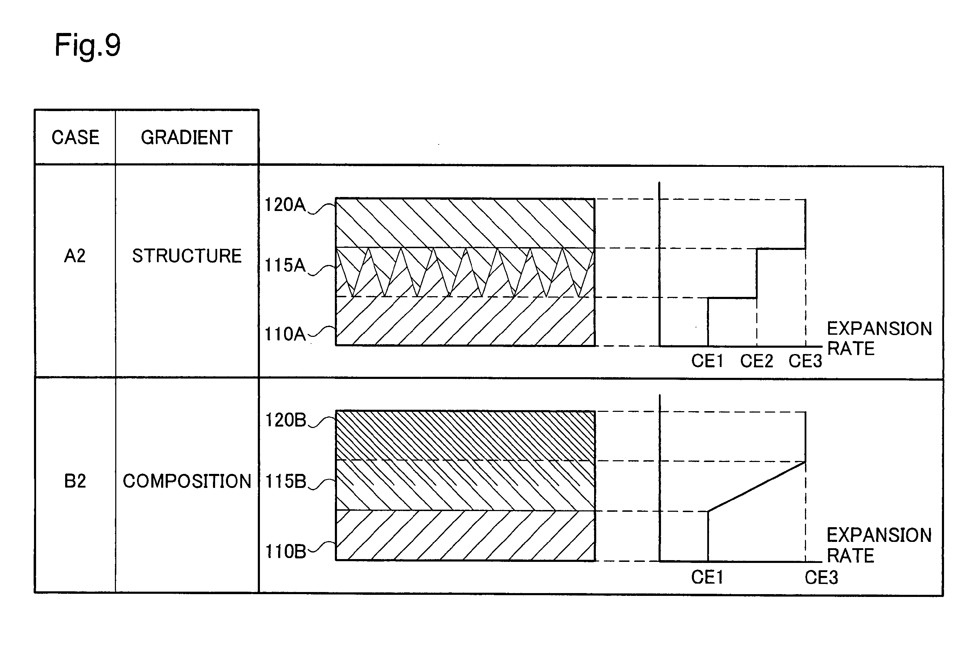

FIG. 9 is an illustration modeling electrolyte membrane structures of Variation Examples. The stress-relieving layer 115 may be realized not just by substituting material for the hydrogen-permeable metal layer 120 or the electrolyte layer 110, by also by modifying the construction or composition. Case A2 depicts an example wherein the layer is realized by structural means. In Case A2, the electrolyte layer 110A and the hydrogen-permeable metal layer 120A have complementary contoured surfaces. The interior of the medial layer formed by meshing the two layers constitutes a stress-relieving layer 115A. In this stress-relieving layer 115A, the electrolyte layer 110A and the hydrogen-permeable metal layer 120A are locally interwoven, and thus the average expansion rate is value lying between those of the electrolyte layer 110A and the hydrogen-permeable metal layer 120A.

In Case B2 depicts an example wherein the layer is realized by varying the composition. Between the hydrogen-permeable metal layer 120B and the electrolyte layer 110B is formed a stress-relieving layer 115B which is a mixture of the compositions of the two. The composition within the stress-relieving layer 115B decreases in density of hydrogen-permeable metal and increases in density of electrolyte, going from the hydrogen-permeable metal layer 120B towards the electrolyte layer 110B. Here, there is given an example in which the expansion rate changes continuously in linear fashion, but it would be possible for it to change in nonlinear fashion, or to change discontinuously. Besides this arrangement, it would be possible for the stress-relieving layer 115 to have an arrangement using a proton-conductive electrolyte layer with an expansion rate lying between the expansion rate of the electrolyte layer 110 and the expansion rate of the hydrogen-permeable metal layer 120. Such an electrolyte layer may be provided as a single layer or multiple layers. Where provided as multiple layers, it is preferable for the expansion rate to vary gradually. The thickness and number of electrolyte layers serving as the stress-relieving layer 115 may be determined on the basis of the electrical characteristics and mechanical strength required of the fuel cell, and other such considerations.

### D. Embodiment 4:

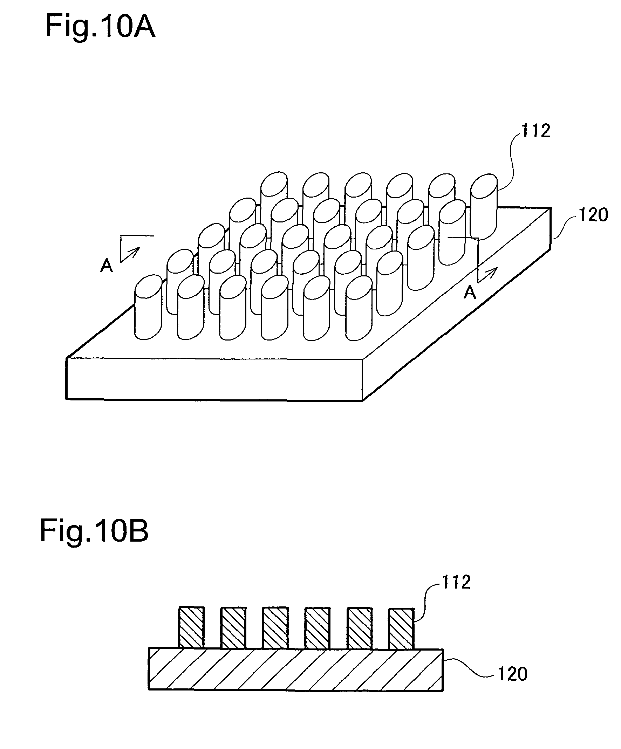

Embodiment 4 will be described next. FIG. 10A is an illustration modeling the structure of an electrolyte membrane, in perspective view; and FIG. 10B is an A-A sectional view thereof. As in the embodiments discussed previously, the hydrogen-permeable metal layer 120 is a uniform layer composed of hydrogen-permeable metal such as a Group VA element or palladium (Pd).

The electrolyte layer 112 is divided into multiple solid cylindrical shapes. As in the embodiments discussed previously, a solid oxide or the like can be used as the material thereof. The electrolyte layer 112 need not be of cylindrical shape, and can take various other shapes. For example, it may take the form of a continuous wall. Nor is it necessary to provide gaps; provided that the layer is divided, disposition in intimate contact is acceptable as well. Divisions need not be at equal intervals, with division at random locations being acceptable as well.

According to the structure of Embodiment 4, strain produced by expansion of the hydrogen-permeable metal layer 120 is absorbed by enlargement of the gaps in the electrolyte layer 112. Accordingly, stress between the hydrogen-permeable metal layer 120 and the electrolyte layer 112 can be avoided, and interlayer separation can be prevented.

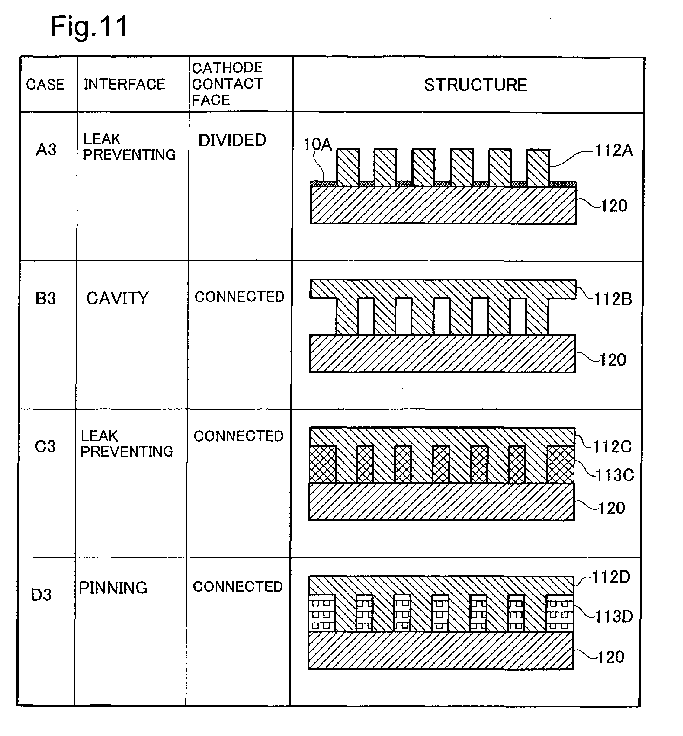

FIG. 11 is an illustration of electrolyte membrane structures of Variation Examples. Here, four cases, namely Case A2 to Case D3 are shown. Each arrangement is classified according to the structure of the contact interface of the electrolyte layer 112 and the hydrogen-permeable metal layer 120, and depending on whether the cathode contact face is partial or the entire face.

Case A3 is an example in which a leak prevention mechanism is disposed at the contact interface, and the cathode contact face is divided. The structure of the electrolyte layer 112 is divided in the same manner as in the Embodiment discussed above (see FIG. 10A and FIG. 10B). In case A3, a leak prevention mechanism is disposed in the gaps of the electrolyte layer 112A, for preventing leakage of hydrogen between the hydrogen-permeable metal layer 120 and cathode, which will be positioned on the upper face in the drawing. The leak prevention mechanism is constituted, for example, by depositing a hydrogen-permeable metal oxide, nitride, or carbide by means of a plating method or the like. Where a material that has flow properties at fuel cell operating temperatures, such as glass, is used, an advantage is that hydrogen leakage can be prevented even more reliably. The liquid proton conductor described earlier can also be employed as a leak prevention mechanism.

Case B3 is an example in which the contact interface has cavities and a connected cathode contact face. As illustrated, the electrolyte layer 112B is divided at the contact interface with the hydrogen-permeable metal layer 120, but connected at the cathode contact face. By means of this structure, a sufficient contact area with the cathode is assured, whereby proton conductivity can be improved and membrane resistance can be reduced.

Case C3 is an example similar to in Case B3, wherein a leak prevention mechanism 113C is disposed at the interface of the hydrogen-permeable metal layer 120 and the electrolyte layer 112C. The leak prevention mechanism 113C may employ materials similar to those of Case A3. By so doing, leakage of hydrogen can be reduced.

Case D3 is an example similar to in Case B3, wherein pinning material 113D is disposed between the hydrogen-permeable metal layer 120 and the electrolyte layer 112D in order to pin the two. In preferred practice, material capable of ensuring greater interfacial strength than the interfacial strength between the hydrogen-permeable metal layer 120 and the electrolyte layer 112D will be used as the pinning material 113D between the hydrogen-permeable metal layer 120 and the electrolyte layer 112D. Magnesium oxide (MgO) is an example of such a material. The material need not have hydrogen permeability or proton conductivity. In this example, the pinning material is disposed only within the electrolyte layer 112D, but it could also be situated so as to infiltrate into the interior of the hydrogen-permeable metal layer 120. By using the pinning material 113D it is possible to further prevent separation of the hydrogen-permeable metal layer 120 and the electrolyte layer 112D.

### E. Embodiment 5:

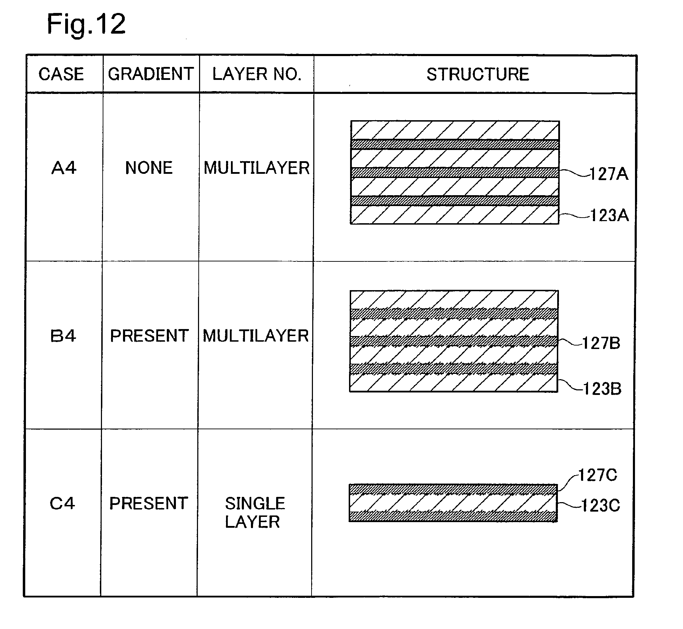

FIG. 12 is an illustration depicting the hydrogen-permeable metal layer of Embodiment 5. The electrolyte membrane can be formed by forming an electrolyte layer on the upper face or lower face thereof. In Embodiment 5, the hydrogen-permeable metal layer is formed of a combination of two types of metal, one with high hydrogen permeability and one with low permeability. Here, three cases are shown by way of example.

Case A4 is an example of a composition without a gradient. The arrangement is one having metal layers 127A with low hydrogen permeability disposed between metal layers 123A with high permeability. Multiple metal layers 123A, 127A are stacked up. Group VA elements or alloys thereof may be used for the metal layers 123A, for example. Palladium (Pd) or palladium alloy may be used for the metal layers 127A. The metal layers 127A can also employ alloys of Group VA elements, with nickel (Ni), copper (Cu), cobalt (Co) or the like added individually or in combination.

Case B4 is an example of a composition similar to Case A4, but having a gradient in the film thickness direction between the layers. Such a structure can be produced, for example, by disposing metal layers 127B of low hydrogen permeability between metal layers 123B of high permeability, then heating to bring about metal diffusion between the layers. In preferred practice, in order to promote diffusion, an alloy of a Group VA element with a low level of added nickel (Ni) will be used for the metal layers 123B, and vanadium alloy with a high level of added nickel (Ni) will be used for the metal layers 127B. As an example, added nickel can be on the order of 5% in the metal layers 123B, and vanadium alloy with f 50% added nickel can be used in the metal layers 127B.

Case C4 is an example furnished with a single metal layer 123C of high hydrogen permeability, and metal layers 127B of low permeability disposed on either side thereof. A case of a composition gradient similar to Case B4 between the layers is shown by way of example, but a gradient may be lacking as well, as in Case A4. The structure of Case C4 may be produced by the following procedure, for example. First, after laminating the metal layers 172C to either side of the metal layer 123C, it is heated to bring about metal diffusion between the layers. In this state, layers of high density of metal having low hydrogen permeability remain on the surfaces, so a predetermined range of the surface is removed through grinding or etching. The thickness to be removed can be selected depending on the heat and process time during metal diffusion. By grinding the surfaces in this way, the metal layers of low hydrogen permeability can be made thinner so as to improve hydrogen permeability.

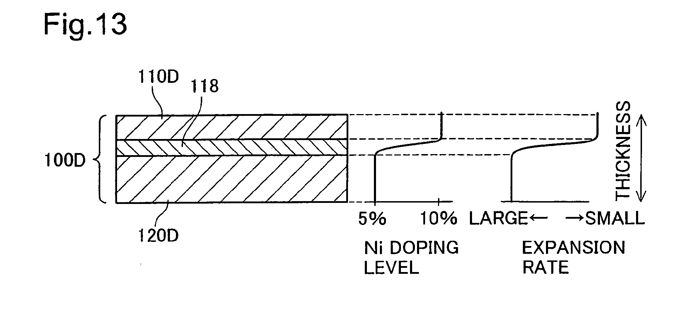

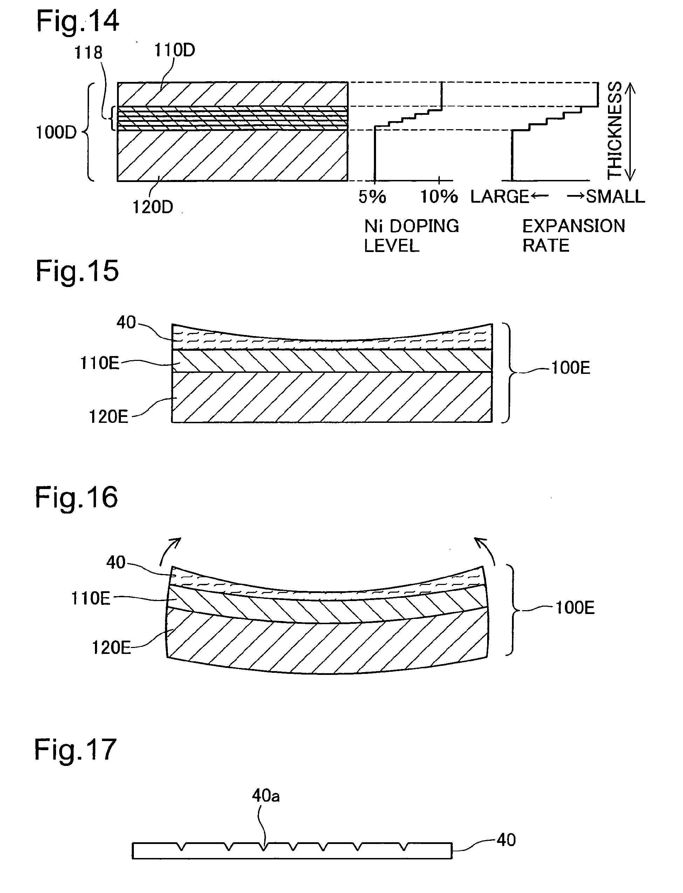

A Variation Example of Embodiment 5 discussed above will be described next. FIG. 13 is model depiction of an electrolyte membrane 100D of the Variation Example. As shown, this electrolyte membrane 100D for use in a fuel cell is given a different composition of the hydrogen-permeable metal layer 120D on the electrolyte layer 110D side, so as to produce a medial layer 118. In this Variation Example, the hydrogen-permeable metal layer 120D employs vanadium alloy with 5 percent added nickel Ni, whereas in the medial layer 118 the nickel doping level (content) increases going towards the electrolyte layer 110D side, reaching a maximum of 10 percent. Vanadium-nickel alloy has the characteristic that the expansion rate during hydrogen permeation is lower at higher nickel Ni doping levels. Expansion rate is modeled at right in FIG. 13. Where this structure is employed, the difference in expansion rate at a location contacting the electrolyte layer 110D is low, so tensile stress on the electrolyte layer 110D is reduced. The medial layer 118 may be integrally formed with the hydrogen-permeable metal layer 120D, or formed as an independent layer. In the former case, it is acceptable to employ a structure wherein the surface of the hydrogen-permeable metal layer 120D is doped with nickel Ni, with the doping level increasing towards the surface. As shown by way of example in FIG. 13, a structure wherein the nickel Ni doping level in the medial layer 118 increases gradually in a continuous manner towards the electrolyte layer 110D side is acceptable as well. Or, a structure as shown by way of example in FIG. 14, wherein a number of hydrogen-permeable metal layers with different nickel Ni doping levels are layered so that the nickel Ni doping level increases in a stepwise manner towards the electrolyte layer 110D side, is also acceptable. In the former case, fabrication can be simplified since there is no need for a layering step. In the latter case, there is the advantage that variation in the nickel Ni doping level is easily adjustable. By establishing the nickel Ni doping level and layer thickness, the characteristics of variation in expansion rate can be designed with considerable freedom. Whereas in this example the expansion rate is adjusted by means of the nickel Ni doping level, other materials could be employed appropriately, as long as the material permits adjustment of the expansion rate during hydrogen permeation.

By means of the above structures, expansion of the metal layer with high hydrogen permeability can be regulated by the metal layers with low hydrogen permeability. Accordingly, expansion of the hydrogen-permeable metal layer as a whole can be regulated, and separation from the electrolyte layer can be prevented. While the example depicted in FIG. 12 illustrates a metal layer of high permeability furnished on both sides with metal layers of low permeability, the layer could be furnished on one side only, as illustrated in FIG. 13 or FIG. 14.

### F. Embodiment 6:

An electrolyte membrane 100E used in the fuel cell of Embodiment 6 will be described next. As shown in FIG. 15, this electrolyte membrane 100E comprises a hydrogen-permeable metal layer 120E and an electrolyte layer 110E, and is furnished with a reinforcing plate 40 contacting the electrolyte layer 110E. In this embodiment, the reinforcing plate 40 is made of punched metal of specific aperture ratio, but a plate of wire netting, lattice, or mesh configuration could be used as well. The reinforcing plate 40 decreases in thickness towards its center portion. Thus, since the center portion of the reinforcing plate 40 is thin, when the electrolyte membrane 100E is subjected to stress due to a difference in expansion rate between the hydrogen-permeable metal layer 120E and the electrolyte layer 110E during hydrogen permeation the electrolyte membrane 100E is pushed and bent while deforming convexly towards the hydrogen-permeable metal layer 120 side. This condition is depicted in FIG. 16. Since the reinforcing plate 40 has lower mechanical strength in its center portion, and the electrolyte layer 110E in its entirety becomes convex towards the hydrogen-permeable metal layer 120 side, deformation that would subject portions of the electrolyte layer 110E to strong tensile stress does not occur. This is because there is no localized buckling etc. triggered by warping due to expansion of the electrolyte layer 110E. When deformation like that depicted in FIG. 16 is produced, the electrolyte layer 110E is subjected to compressive stress, but particular in cases where the electrolyte membrane is ceramic, the electrolyte layer 110E has high strength against compressive stress as compared to tensile stress, so the likelihood of damage to the electrolyte membrane 100E by such deformation is reduced appreciably.

In Embodiment 6 described above, the thickness of the reinforcing plate 40 contacting the electrolyte layer 110E is made thinner in the center portion thereof, so that convex deformation towards the hydrogen-permeable metal layer 120E can readily occur; however, it would be acceptable to instead provide notched portions 40a in the reinforcing plate 40 as depicted in FIG. 17, so as to facilitate such deformation. The notched portions 40a may be disposed in concentric circles about the center of the electrolyte membrane 100E, or small notched portions 40a may be disposed at predetermined intervals, as long as the design provides uniform deformation. In this embodiment, due to the presence of the reinforcing plate 40, the reinforcing plate 40 is furnished with a design facilitating specific deformation, but where the collector of the oxygen electrode is in direct contact with the electrolyte membrane 100E, the collector may be made thinner at the center to endow it with a similar structure.

### G. Embodiment 7:

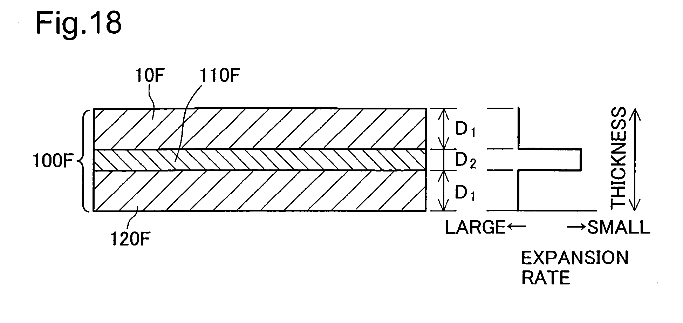

Embodiment 7 will be described next. FIG. 18 is an illustration depicting the structure of the electrolyte membrane 100F of Embodiment 7. In this embodiment, the electrolyte membrane 100F is formed from an electrolyte layer 110F with proton conductivity and a hydrogen-permeable metal layer 120F; a cathode electrode (oxygen electrode) 10F formed on the electrolyte layer 110F is of the same material and thickness D1 as the hydrogen-permeable metal layer 120F. In Embodiment 7, palladium Pd is used for both the cathode electrode 10F and the hydrogen-permeable metal layer 120F. In this embodiment, thickness of each is 30 to 40 µm.

As a result of employing this structure, even when the electrolyte layer 110F expands during hydrogen permeation, since the cathode electrode 10F and the hydrogen-permeable metal layer 120F have the same expansion rate and depth D1, the electrolyte layer 110F is subjected to substantially identical stretch and substantially identical stress from both sides thereof. As a result, the electrolyte layer 110F is not subjected to force bending it in one direction, so that the electrolyte layer 110F is kept flat overall. It suffices for the expansion rate and depth of the cathode electrode 10F and the hydrogen-permeable metal layer 120F to be designed so as to cancel out the forces to which the electrolyte layer 110F is subjected by the two; there is no need for them to have completely identical thickness, for example. Since in some instances the cathode electrode 10F may have a complex shape (see FIG. 1), the force to which the electrolyte layer 110F is subjected from the cathode electrode side should be measured or calculated, and the expansion rate and thickness of the hydrogen-permeable metal layer 120 designed so that the electrolyte layer 110F is subjected to generally equivalent force thereby. The material for the cathode electrode 10F and the hydrogen-permeable metal layer 120 is not limited to palladium Pd, it being possible to use any of the various materials taught in the preceding embodiments.

### H. Embodiment 8:

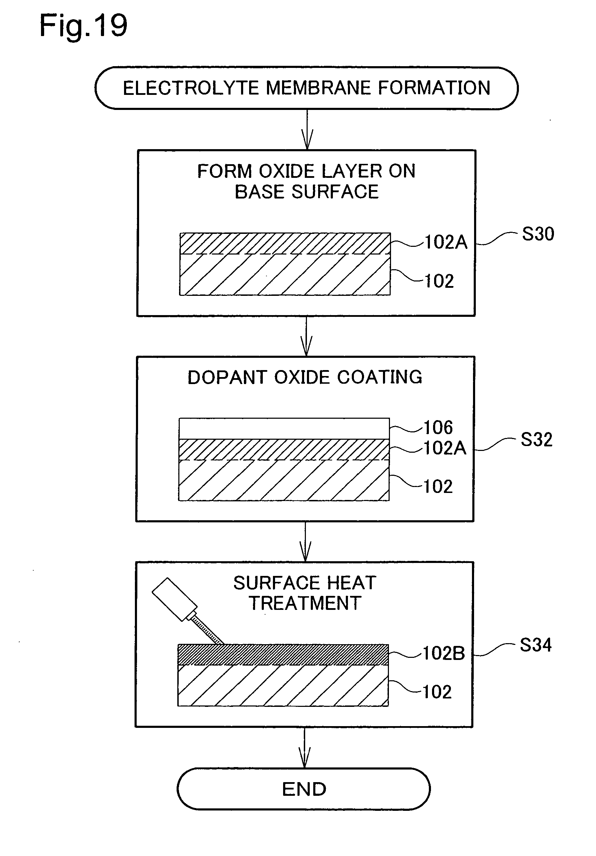

FIG. 19 is a step diagram showing the process of producing the electrolyte membrane of Embodiment 8. In Embodiment 8, a base 102 of hydrogen-permeable metal is prepared, and an oxide layer 102A is formed thereon (Step S30). A Group VA element may be used as the metal, for example.

This oxide layer 102A is then coated with a dopant oxide 106 (Step S32). Where the base consists of vanadium (V), this additive may be lanthanum (La), gadolinium (Gd), barium (Ba) or the like. Where the base consists of tantalum (Ta), potassium (K) or the like may be used. It possible to use metal having lower valence than the metal used for the base.

Next, the coated surface is subjected to heat treatment by means of a laser or the like (Step S34). By so doing, hole conductivity is imparted by the dopant, and a proton conducting layer 102B that contains the dopant is formed on the surface of the base 102. Where the base consists of vanadium (V), for example, the proton conducting layer 102B can be a perovskite vanadium oxide such as LaVO₃ or GdVO₃.

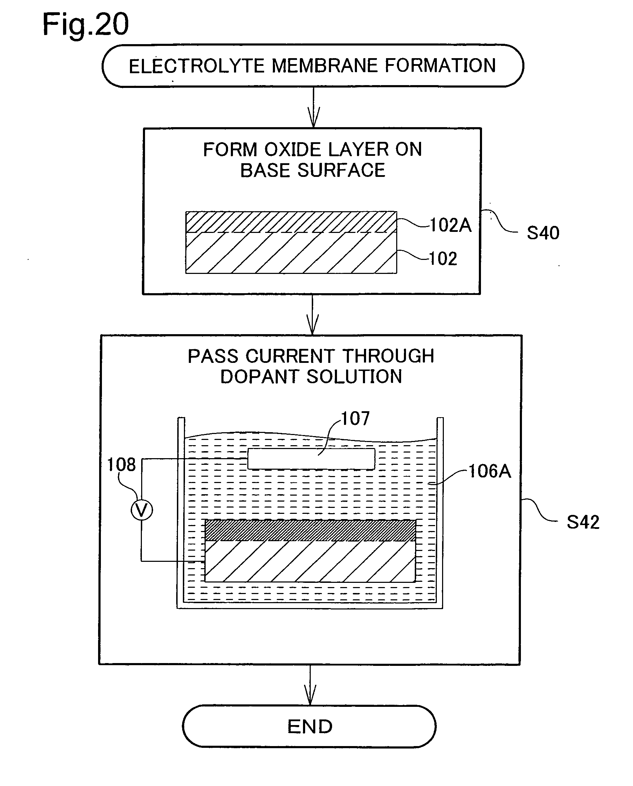

FIG. 20 is a step diagram showing the process of producing the electrolyte membrane of a Variation Example. In this process, an oxide layer 102A is formed on the surface of the base 102 (Step S40). Next, the base 102 is immersed in a solution 106A containing the dopant, a power supply is connected between the base 102 and an electrode 107, and current is passed through them (Step S42). By so doing, the dopant in the solution, e.g. lanthanum ion (La³⁺), reacts with the oxide layer 102A, forming a proton conducting layer. The entire solution could be heated instead of using electrical current.

In the electrolyte membrane of Embodiment 8 described above, the oxide layer formed on the surface of the base functions as an electrolyte layer, i.e. as a proton conducting layer. Accordingly, separation of the electrolyte layer and the hydrogen-permeable metal layer can be prevented. Depending on the combination of base and additive, it is also possible to produce a proton conducting layer having electron conductivity, and the oxide layer formed thereby can be utilized as a metal diffusion preventing layer. Accordingly, the surface of the oxide layer may be coated with palladium Pd or alloy thereof, to form the hydrogen-permeable metal layer.

### I. Embodiment 9:

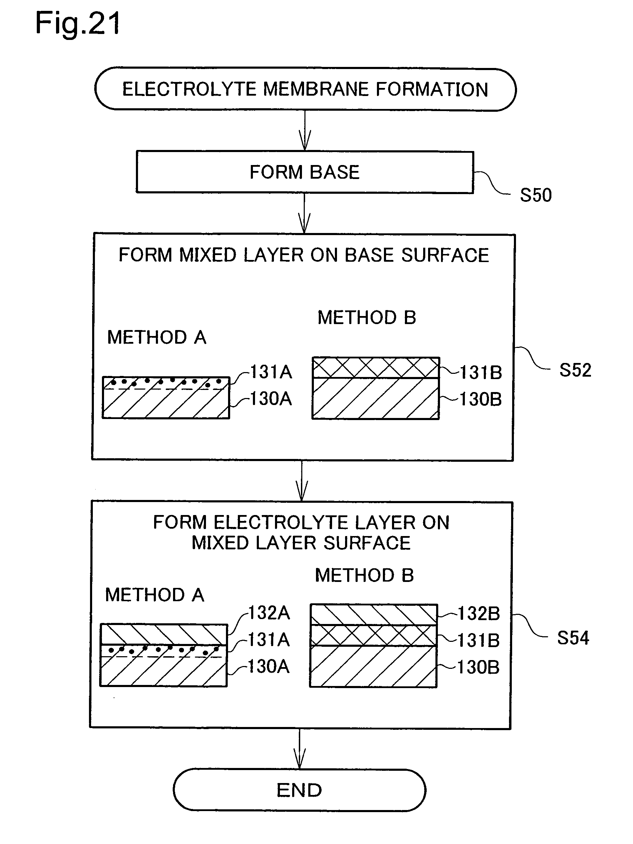

FIG. 21 is an illustration depicting the process of producing the electrolyte membrane of Embodiment 9. In this process, the base is formed by hydrogen-permeable metal (Step S50), and a mixed layer is formed on the surface thereof (Step S52). The mixed layer is a layer in which the hydrogen-permeable metal forming the base and the material forming the electrolyte layer are admixed.

In the drawing, two methods for forming the mixed layer, namely Method A and Method B, are depicted in model form. In Method A, ceramic material for forming the electrolyte is implanted in a base 130A to produce a mixed layer 131A in a region close to the surface. The material may be implanted by various methods, for example:
(1) a method wherein the surface of the base 130A is physically abraded with particles of ceramic material;
(2) a sandblasting method wherein particles of ceramic material are blasted against the surface of the base 130A;
(3) a method in which the base 130A is subjected to ultrasonic vibration in an aqueous solution with ceramic particles mixed in, to induce the ceramic particles to physically collide with the surface of the base 130A;

and the like.

In Method B, a separate mixed layer 131B is produced on the surface of a base 130B. The mixed layer 131B of Method B may be produced by various methods, for example:
(a) a method of coating the surface of the base 131B with fine ceramic particles approximately 1 µm or smaller in diameter coated thinly with hydrogen-permeable metal, followed by firing;
(b) a method of coating the surface of the base 131B with a mixture of fine particles of hydrogen-permeable metal and fine ceramic particles, followed by firing;
(c) a method of coating the surface of the base 131B with an aqueous solution of a hydrogen-permeable metal complex and fine ceramic particles, followed by firing;

and the like.

Formation of the mixed layer need not rely exclusively on either of the aforementioned Methods A and B, but may be accomplished using a combination of the two, or some other method besides the two. In the formation process of Embodiment 9, an electrolyte layer is formed on the surface of the mixed formed in this way (Step S54). In the drawing, electrolyte layers 132A, 132B formed in Method A and Method B respectively are depicted in model form. Formation of the electrolyte layer may be accomplished by physical vapor deposition (PVD), chemical vapor deposition (CVD), a sol gel process, plating, or other method. In Embodiment 9, the ceramic particles included in the mixed layer serve as crystal nuclei during film growth, and have the effect of increasing the rate of film growth.

According to Embodiment 9, by means of interposing a mixed layer between the base and the electrolyte layer, interfacial strength between the layers can be improved, and separation can be prevented. In Embodiment 9, the mixed layer may consist of materials the same as or different from the base and the electrolyte layer.

### J. Embodiment 10:

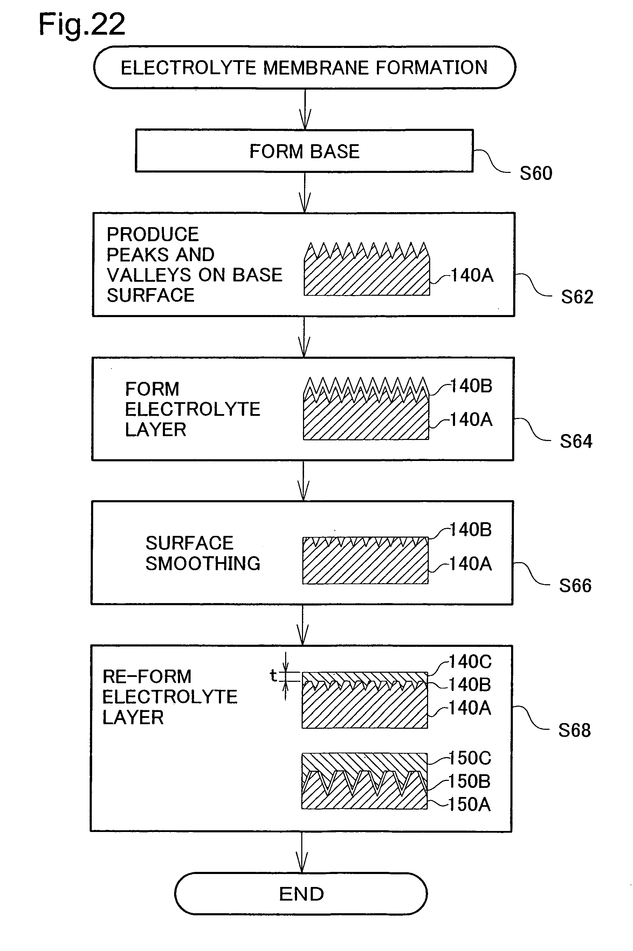

FIG. 22 is an illustration depicting the process of producing the electrolyte membrane of Embodiment 10. In this process, a base is formed from hydrogen-permeable metal (Step S60), and peaks and valleys are produced on the surface thereof (Step S62). The base 140A is depicted in model cross section in the drawing. For convenience, regular peaks and valleys are shown by way of example, but an irregular pattern would be acceptable as well. It is not necessary for the apical portions of the peaks to be angled. The peak and valley pattern may be produced, for example, by subjecting the surface of the base 140A to physical polishing, chemical polishing, ion bombardment, laser irradiation, or the like.

Next, an electrolyte layer 140B is formed on the surface of the base 140A imparted with the peak and valley pattern (Step S64). Formation of the electrolyte layer 140B may be accomplished by physical vapor deposition (PVD), chemical vapor deposition (CVD), a sol gel process, plating, or other method, for example. Any peaks and valleys remaining on the surface formed in this way are then polished off to produce a smooth face (Step S66). Another electrolyte layer 140C is then formed on the smooth face (Step S68). Since the electrolyte layers 140B, 140C are the same material, they are unified by this process. In preferred practice, electrolyte layer 140C thickness t will be on the order of 0.1 -1 µm.

This process, together with a cross section where carried out with other types of material, is shown by way of example within the frame of Step S68. For example, after a palladium Pd layer 150B and an electrolyte layer 150C have been formed on the surface of a base 150A of vanadium V (Step S64), surface smoothing can be carried out (Step S66), and the electrolyte layer 150C then re-formed, thereby forming a electrolyte membrane of three-layer structure.

According to the electrolyte membrane of Embodiment 10, by imparting a peak and valley pattern to the interface of the base and the electrolyte layer, separation of the layers can be prevented. In the process of forming the electrolyte membrane of Embodiment 10, the surface smoothing step may be omitted, but as indicated below, this step has the advantage of providing a more consistent product, while allowing the electrolyte layer to be made thinner. Typically, where a peak and valley pattern is produced on the base surface and the electrolyte layer is formed thereon, there are instances in which if the electrolyte layer is thinned, holes are produced in the electrolyte layer by the peak portions of the base. In Embodiment 10, a "smooth face" can be formed by filling in the valley portions with electrolyte, so that the occurrence of holes during formation of the electrolyte layer can be avoided.

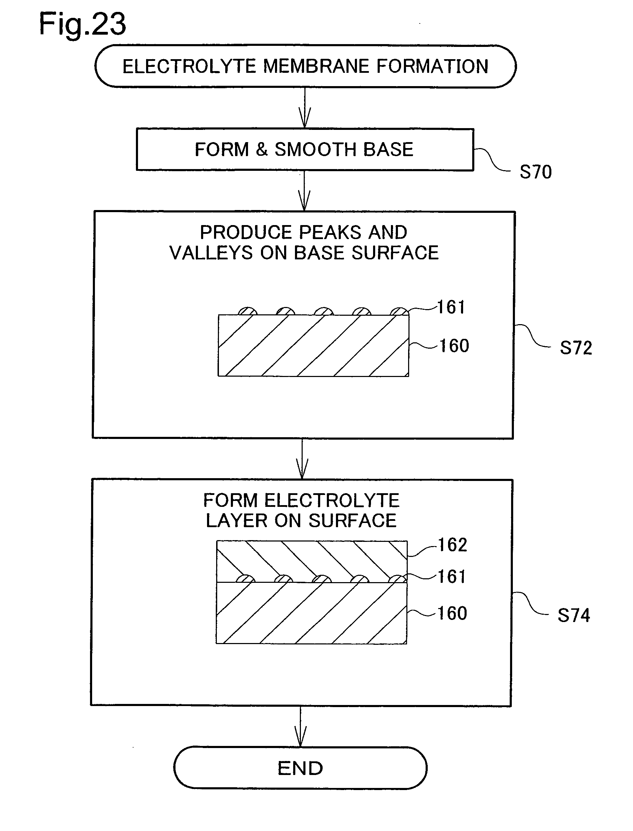

FIG. 23 is an illustration depicting the process of producing the electrolyte membrane of a Variation Example of Embodiment 10. In this process, a base is formed from hydrogen-permeable metal, and its surface is smoothed (Step S70). Smoothing may be accomplished by means of physical polishing or chemical polishing, for example. Next, the base surface is imparted with a peak and valley pattern (Step S72). However, in this Variation Example, in contrast to Embodiment 10, the surface of the base 160 is imparted with a peak and valley pattern by means of applying peak portions 116 of the same material as the base, in a striped pattern. This process can be carried out, for example, by physical vapor deposition (PVD), chemical vapor deposition (CVD), a sol gel process, plating, or other method, for example. Using this method, it is possible to produce a fine peak and valley pattern on the order of several nm to several ten nm.

Next, an electrolyte layer 162 is formed over the peak and valley face formed in this way (Step S74). In preferred practice, thickness of the electrolyte layer 162 will be sufficiently thin, while within a range in which creation of holes by the peak and valley pattern can be avoided. Since the peak and valley pattern of this Variation Example is very fine, creation of holes can be avoided even where film thickness is on the order of 0.1 -1 µm. The peak portions 116 of stripe form may be formed at equal intervals, or at random intervals. Their width may be constant, or vary appropriately.

### K. Embodiment 11:

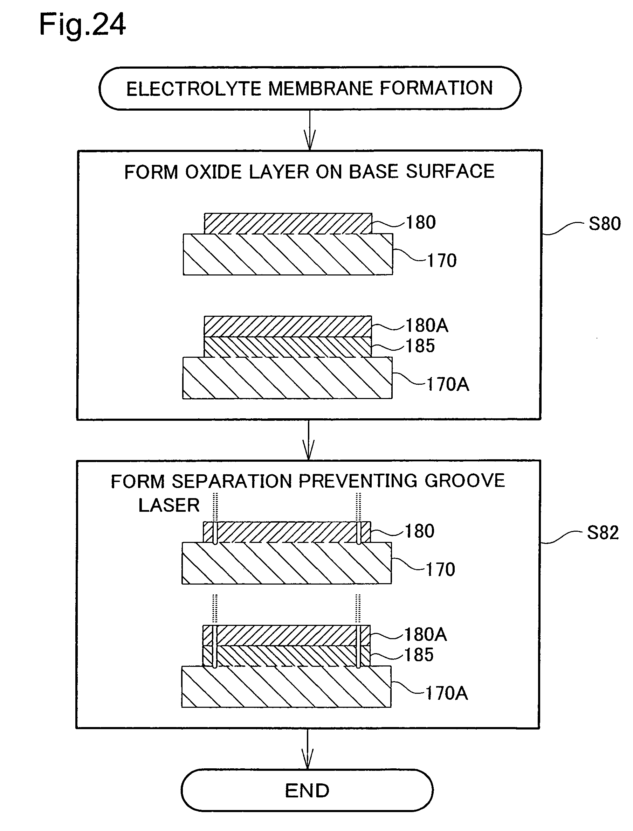

FIG. 24 is an illustration depicting the process of producing the electrolyte membrane of Embodiment 11. In this process, a base 170 is formed from hydrogen-permeable metal, and an electrolyte layer 180 is stacked thereon (Step S80). Formation of the electrolyte layer 180 may be carried out by physical vapor deposition, chemical vapor deposition, a sol gel process, plating, or various other methods cited by way of example in the preceding embodiments. The planar area of the electrolyte layer 180 viewed in the stacking direction (hereinafter termed "planar area") is smaller than the planar area of the base 170. By making the planar area of the electrolyte layer 180 smaller than the planar area of the base 170, when a plurality of electrolyte membranes are stacked, the portions of the bases 170 that extend out beyond the electrolyte layers 180 can be used to join the electrolyte membranes to one another, affording the advantage that since these portions consist of the same material, secure bonding among the layers can be achieved relatively easily. As illustrated, a medial layer 185 may be disposed between the base 170A and the electrolyte layer 180A. The medial layer 185 may employ the stress-relieving layer or skeletal frame member taught in the various embodiments discussed previously, for example.

Next, a separation prevention groove is formed on the electrolyte membrane formed in this way (Step S82). The groove can be formed by irradiation with a laser, or by physical cutting using a cutting instrument. The groove is formed with a depth penetrating through the electrolyte layer 180, 180A and the medial layer 185, down to the base 170, 170A. In preferred practice, the groove will be formed in the stacking direction, i.e. downward in the drawing.

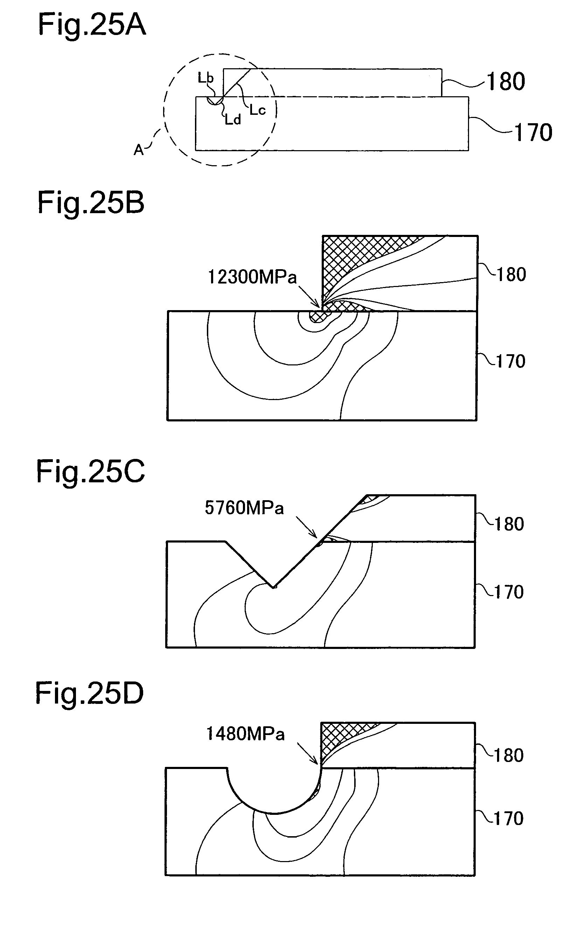

FIG. 25A to FIG. 25D are illustrations depicting the separation preventing action of the groove. FIG. 25A is a side sectional view showing the entire electrolyte membrane with the electrolyte layer 180 formed on the base 170. FIG. 25B to FIG. 25D depict, in enlarged view of the area A within the broken line in FIG. 25A, the results of analysis of distribution of principal stress produced by differences in the expansion rates of the based 170 and the electrolyte layer 180 while the electrolyte membrane is in service. The cross sections depicted in FIG. 25B to FIG. 25D correspond respectively to Lb, Lc, and Ld in FIG. 25A. While the numerical values of principal stress given in the drawings will vary with the conditions of the analysis, the qualitative magnitude of FIG. 25B to FIG. 25D is maintained regardless of the conditions of the analysis.

Stress observed in the absence of a groove is illustrated in FIG. 25B. The curves in the drawing are equal stress lines; the hatched portions represent the areas of highest stress. In the joint portion of the base 170 and the electrolyte layer 180, a value of 12300 MPa is observed due to stress concentration. In FIG. 25C, stress observed when a wedge-shaped groove is form is illustrated. With this shape, stress in the joint portion is 5760 Mpa, which represents a reduction to about 45% of the level observed when no groove is present. In FIG. 25D, stress observed when a semicircular groove is form is illustrated. With this shape, stress in the joint portion is 1480 Mpa, which represents a reduction to about 12% of the level observed when no groove is present. In this way, the groove ameliorates sudden change in cross sectional shape in the joint portion of the base 170 and the electrolyte layer 180, which has the effect of relieving stress concentration. By means of this action, the electrolyte membrane of Embodiment 11 can prevent separation of the base 170 and the electrolyte layer 180 during service due to the difference in expansion rate between them.

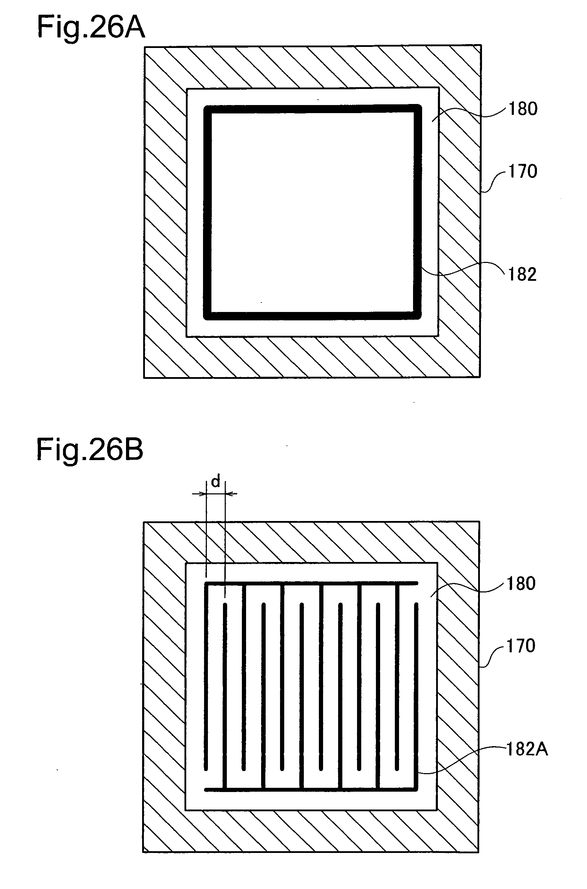

FIG. 26A and FIG. 26B are plan views depicting two types of electrolyte membrane in Embodiment 11. Examples of patterns for forming the groove described above are shown. FIG. 26A depicts an example of a rectangular groove 182. FIG. 26B depicts an example of a groove 182A having a plurality of parallel segments arranged at a fixed interval d. While the shape of the groove may be selected arbitrarily, where the groove 182 is disposed along the outside of the electrolyte layer 180 as depicted in FIG. 26A, there is the advantage that effective area of the electrolyte layer 180, i.e. the portion outside the groove, can be assured. Where a relatively convoluted groove 182A is formed as shown in FIG. 26B, since stress is relieved in the groove portion, stress can be relieved in the electrolyte layer 180 overall. In FIG. 26B, in the event that for some reason a crack should form in the surface of the electrolyte layer 180 during service, stress in the cracked portion is relieved by the effect of the groove in the vicinity of crack, so that separation of the base 170 and the electrolyte layer 180 starting from the cracked portion can be prevented.

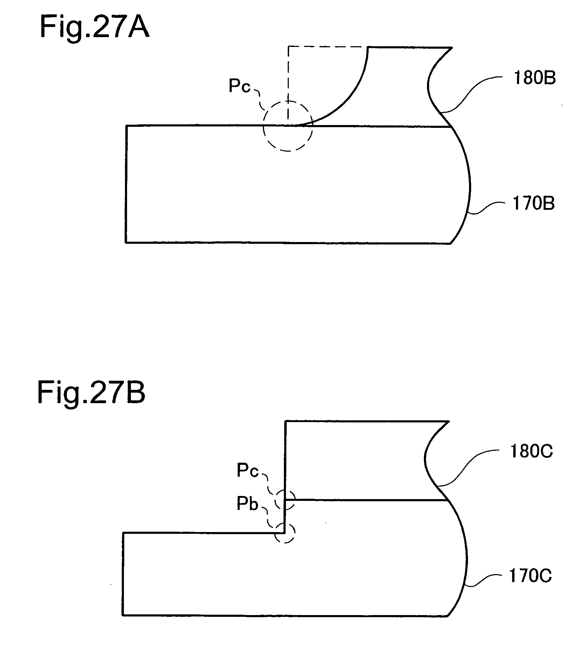

FIG. 27A and FIG. 27B are illustrations depicting the cross section of the electrolyte membrane of a Variation Example of Embodiment 11. The electrolyte membrane of this embodiment is not limited to one furnished with the various grooves depicted in FIG. 25B to FIG. 25D; various structures for smoothly connecting the outside surfaces of the base and the electrolyte layer at the joint portion of the two may be employed as well. Smooth connection of the outside surfaces refers to the absence of any discontinuous change of the direction of the normal vector of the outer surface, and to a continuous directional derivative of the outer surface within the cross section orthogonal to the stacking direction. FIG. 27A depicts the upper surface of the base 170B as being flat, with the angle of the electrolyte layer 180B cut to arcuate shape as illustrated. With this shape as well, the surfaces of the base 170B and the electrolyte layer 180B are smoothly connected in the joint portion Pc of the two. Accordingly, stress concentrations in the joint portion can be relieved.

FIG. 27B depicts the upper surface of the electrolyte layer 180C as being flat, with the base 170C manufactured with a stepped configuration. With this shape, while the cross sectional shape changes sharply at the basal portion Pb of the step in the base 170C, in the joint portion Pc of the base 170C and the electrolyte layer 180C, the surfaces of the two are planar, and connect smoothly. Accordingly, with the structure of FIG. 27B as well, stress concentrations in the joint portion Pc can be relieved.

According to Embodiment 11 discussed above, separation of the base and the electrolyte layer can be prevented by means of a relatively simple structure. The structure described in Embodiment 11 may be applied to a electrolyte membrane in combination with any of the structures described in the previous embodiments.

While the invention has been described in terms of certain preferred embodiments, it is not limited thereby, with various other arrangements being possible without departing from the spirit thereof.

### INDUSTRIAL APPLICABILITY

The invention can be reduced to practice as a fuel cell of various kinds for use in automobiles or stationary equipment, and as a method for manufacturing a electrolyte membrane for such a fuel cell.

## Claims

1. A fuel cell comprising:
a hydrogen electrode (20) for supplying hydrogen;
an oxygen electrode (10) for supplying oxygen; and
an electrolyte membrane (100) disposed between said hydrogen electrode and said oxygen electrode;
wherein said electrolyte membrane (100) includes:
a hydrogen-permeable metal layer (120) of hydrogen-permeable metal (121);
an electrolyte layer (110) formed on the surface of said hydrogen-permeable metal layer (120), composed of material having an expansion rate during hydrogen permeation that differs significantly from that of said hydrogen-permeable metal (121); and
a separation preventing mechanism for preventing separation of said hydrogen-permeable metal layer (120) and said electrolyte layer (110) during hydrogen permeation.

2. A fuel cell according to claim 1, wherein said separation preventing mechanism prevents expansion of said hydrogen-permeable metal layer (120) during hydrogen permeation.

3. A fuel cell according to claim 2, wherein said separation preventing mechanism is constituted by disposing a specific material (126) with a lower expansion rate than said hydrogen-permeable metal (121) during hydrogen permeation within said hydrogen-permeable metal layer (120).

4. A fuel cell according to claim 3, wherein said separation preventing mechanism is positioned so as to avoid the contact interface of said hydrogen-permeable metal layer (120) with other layers.

5. A fuel cell according to claim 1, wherein said separation preventing mechanism is a stress-relieving layer (115) disposed between said hydrogen-permeable metal layer (120) and said electrolyte layer (110) and has hydrogen permeability, and is formed of a material or structure whose average expansion rate during hydrogen permeation is a value lying between that of said hydrogen-permeable metal layer (120) and that of said electrolyte layer (110).

6. A fuel cell according to claim 5, wherein said stress-relieving layer (115) is formed by a proton-conductive electrolyte layer with an expansion rate during hydrogen permeation that is lower than that of said hydrogen-permeable metal layer (120) and higher than that of said electrolyte layer (110).

7. A fuel cell according to claim 5, wherein said stress-relieving layer (115) is formed by a hydrogen-permeable metal layer (120) with an expansion rate during hydrogen permeation that is lower than that of said hydrogen-permeable metal layer (120) and higher than that of said electrolyte layer (110).

8. A fuel cell according to claim 5, wherein said hydrogen-permeable metal layer (120) and said stress-relieving layer (115) are constituted as multiple stacked layers.

9. A fuel cell according to claim 5, wherein said hydrogen-permeable metal layer (120) and said stress-relieving layer (115) are joined by means of metal diffusion, and said stress-relieving layer (115) is constituted by removing a predetermined thickness of the surface of the side opposite said joining face.

10. A fuel cell according to claim 1, wherein said separation preventing mechanism is a reinforcing member (118) disposed in localized manner between the electrolyte layer (110) and the hydrogen-permeable metal layer (120) in intimate contact with the layers, and having higher interfacial strength than the interfacial strength between said electrolyte layer (110) and said hydrogen-permeable metal layer (120).

11. A fuel cell according to claim 1, wherein said separation preventing mechanism is a mixed layer (131A, 131B) disposed between said hydrogen-permeable metal layer (120, 130A, 130B) and said electrolyte layer (110, 132A, 132B) and containing a mixture of the materials that make up the two layers.

12. A fuel cell according to claim 1, wherein said separation preventing mechanism consists of irregular surfaces that mesh with one another, which are formed on the contact faces of said hydrogen-permeable metal layer (120) and said electrolyte layer (110).

13. A fuel cell according to claim 1, wherein said separation preventing mechanism has a bending mechanism for pushing and bending said electrolyte membrane (100) with said electrolyte layer (110) on the inward side.

14. A fuel cell according to claim 13, wherein said bending mechanism has a structure wherein a member (40) disposed on the side of said electrolyte layer (110) opposite from said hydrogen-permeable metal layer (120) has decreasing rigidity closer to the center portion of said electrolyte membrane (100).

15. A fuel cell according to claim 14, wherein said structure of decreasing rigidity closer to the center of the electrolyte membrane (100) is a structure wherein said member (40) is made thinner at the center.

16. A fuel cell according to claim 1, wherein said separation preventing mechanism is constituted so that the expansion rate during said hydrogen permeation of the electrode forming said oxygen electrode (10) disposed on the surface of said electrolyte layer (110) is approximately equal to the expansion ratio of said hydrogen-permeable metal layer (120) during hydrogen permeation.

17. A fuel cell according to claim 16, wherein the thickness of the electrode forming said oxygen electrode (10) and the thickness of said hydrogen-permeable metal (120) are approximately equal.

18. A fuel cell according to any of claims 1 to 17, wherein the planar area of said electrolyte layer (110, 180) is smaller than the planar area of said hydrogen-permeable metal layer (120, 170); and
said separation preventing mechanism is constituted by imparting to said electrolyte layer and/or said hydrogen-permeable metal layer a cross sectional shape such that the outer surfaces of said electrolyte layer (110, 180) and
said hydrogen-permeable metal layer (120, 170) are smoothly continuous at the edge of said electrolyte layer (110, 180).

19. A fuel cell according to claim 18, wherein said separation preventing mechanism is a groove disposed on at least said hydrogen-permeable metal layer (120, 170), so as to form a face that continues smoothly on from the edge face of said electrolyte layer (110, 180).

20. A fuel cell comprising:
a hydrogen electrode (20) for supplying hydrogen;
an oxygen electrode (10) for supplying oxygen; and
an electrolyte membrane (100) disposed between said hydrogen electrode and said oxygen electrode;
wherein said electrolyte membrane includes:
a hydrogen-permeable metal layer (120) of hydrogen-permeable metal (121); and
an electrolyte layer (110, 112) formed on the surface of said hydrogen-permeable metal layer (100), composed of material having an expansion rate during hydrogen permeation that differs significantly from that of said hydrogen-permeable metal (120), and
said electrolyte layer (110, 112) is divided into a plurality of sections.

21. A fuel cell according to claim 20, wherein a permeation preventing mechanism (113C) is disposed in the gaps of said divided electrolyte layer (110, 112).

22. A fuel cell comprising:
a hydrogen electrode (20) for supplying hydrogen;
an oxygen electrode (10) for supplying oxygen; and
an electrolyte membrane (100) disposed between said hydrogen electrode (20) and said oxygen electrode (10);
wherein said electrolyte membrane (100) includes:
a hydrogen-permeable metal layer (120) of hydrogen-permeable metal (121); and
wherein a retaining member (116B) contacting the surface of said hydrogen-permeable metal layer, and having a plurality of holes at said contact face is disposed; and
a liquid electrolyte (116A) fills said holes.

23. A fuel cell according to claim 22, wherein said retaining member (116B) and said electrolyte layer (110) have common ionic conductivity.

24. A fuel cell according to any of claims 1 to 23, wherein said hydrogen-permeable metal layer (120) supports at least one type of catalyst (30C) selected from the group consisting of reforming catalysts that accelerate reforming reactions of hydrocarbon compounds, carbon monoxide removal catalysts that accelerate reactions to remove carbon monoxide, and atomic hydrogen forming catalysts that accelerate formation of atomic hydrogen.

25. A fuel cell according to any of claims 1 to 24, further comprising a pressure control portions for controlling pressure so that the total pressure of the gas supplied to said hydrogen electrode (20) is greater than the total pressure of the gas on said oxygen electrode side (10).

26. A fuel cell comprising:
a hydrogen electrode (20) for supplying hydrogen;
an oxygen electrode (10) for supplying oxygen; and
an electrolyte membrane (100) disposed between said hydrogen electrode (20) and said oxygen electrode (10);
wherein said electrolyte membrane (100) includes:
a hydrogen-permeable metal layer (120) of hydrogen-permeable metal (121); and
an electrolyte layer (110) formed on an oxide layer that has been formed on the surface of said hydrogen-permeable metal layer (120), wherein said electrolyte layer (110) is doped with a heterogeneous element of smaller valence than said hydrogen-permeable metal (121).

27. A fuel cell according to claim 26, wherein said hydrogen-permeable metal is selected from the group consisting of a Group VA element and alloy thereof.

28. A method for manufacturing an electrolyte membrane comprising:
(a) producing a thin film of hydrogen-permeable metal (102);
(b) oxidizing one surface of said thin film to form an oxide layer (102A); and
(c) doping said oxide layer (102A) with a heterogeneous element of smaller valence than said hydrogen-permeable metal, producing a layer of a compound oxide of said hydrogen-permeable metal and the heterogeneous element (102B).

29. A method according to claim 28, wherein said doping step (c) includes:
coating the surface of said oxide layer (102A) with said heterogeneous element; and
heating said coating.

30. A method according to claim 28, wherein said doping step (c) includes:
immersing said oxide layer (102A) in a solution containing said heterogeneous element (106A); and
while immersed, heating or passing electrical current through the solution.

31. A method for manufacturing an electrolyte membrane for use in a fuel cell, comprising a hydrogen-permeable metal layer (130A,130B) and an electrolyte layer (132A, 132B), said method comprising:
(a) forming said hydrogen-permeable metal layer (130A,130B);
(b) forming on the surface of said hydrogen-permeable metal layer (130A, 130B) a mixed layer (131A,131B) containing a mixture of the materials forming said hydrogen-permeable metal layer (130A,130B) and said electrolyte layer (132A,132B); and
(c) forming said electrolyte layer (132A,132B) on the surface of said mixed layer (131A,131B).

32. A method for manufacturing an electrolyte membrane for use in a fuel cell, comprising a hydrogen-permeable metal layer (140A) and an electrolyte layer (140B), said method comprising:
(a) forming said hydrogen-permeable metal layer (140A);
(b) producing an irregular pattern on the surface of said hydrogen-permeable metal layer (140A); and
(c) forming said electrolyte layer (140B) on said irregular surface, so as to mesh with said irregular pattern.

33. A method for manufacturing an electrolyte membrane for use in a fuel cell, comprising a hydrogen-permeable metal layer (170) and an electrolyte layer (180), said method comprising:
(a) forming said hydrogen-permeable metal layer (170);
(b) stacking onto said hydrogen-permeable metal layer (170) an electrolyte layer (180) of smaller planar area than said hydrogen-permeable metal layer (170); and
(c) furnishing a groove that penetrates through said electrolyte layer (180) down to said hydrogen-permeable metal layer (170).
